# EUROPEAN PATENT APPLICATION

(11) **EP 4 843 397 A1**
(43) Date of publication of application: **25.11.2026**
(21) Application number: 25754673.9
(22) Date of filing: 12.02.2025
(51) Int. Cl.: A23L 5/00, A23L 2/52, A23L 2/68, A23L 27/00

(54) **FOOD COMPOSITION, METHOD FOR PRODUCING FOOD COMPOSITION, AND ORAL STIMULATION MASKING METHOD FOR HIGHLY ACIDIC FOOD COMPOSITION**

(30) Priority: 13.02.2024 JP 2024019149
(71) Applicant: Mizkan Holdings Co., Ltd., Handa-shi, Aichi 475-8585 (JP); Mizkan Co., Ltd., Handa-shi, Aichi 475-8585 (JP)
(72) Inventor: MOCHIMARU, Shinsuke, Handa-shi, Aichi 475-8585 (JP)
(74) Representative: Hasegawa, Kan
(86) International application number: PCT/JP2025/004519
(87) International publication number: WO 2025/173707

(57) **Abstract**

The present invention aims to provide a food composition in which oral pain caused by the acid in the food composition is suppressed, and a method for producing the food composition. The aim is achieved by a food composition having an acidity, expressed as acetic acid, of 0.10 mass% or more, comprising particles having a number average particle size of 40.0 µm or less, and having a density of 1.20 g/cm³ or less at a temperature of 4 ± 1°C. Preferably, the food composition contains 0.10 mass% or more of an organic acid based on 100 mass% of the food composition, and the organic acid is at least one selected from the group consisting of acetic acid, citric acid, malic acid, lactic acid, and tartaric acid. More preferably, the food composition contains 0.50 mass% or more of fruit juice based on 100 mass% of the food composition.

## Description

### Technical Field

The present invention relates to a highly acidic food composition, a method for producing a highly acidic food composition, and the like.

### Background Art

Organic acids are widely used in the food industry in the expectation of imparting a refreshing sour taste to foods and providing pH-adjusting effects. In recent years, organic acids, such as acetic acid, citric acid, and lactic acid, have sometimes been added to food compositions for the purpose of obtaining health benefits, and the need for food compositions containing organic acids continues to increase.

However, when organic acids are added to a food composition, the acidity of the food composition will increase. Thus, the intake of the food composition may cause a tingling pain in the oral cavity, which has been recognized as a problem.

Conventionally, various techniques have been actively developed to facilitate the intake of organic acids. For example, PLT 1 discloses in claim 2 a technique to add a rare sugar to a liquid food composition containing acetic acid. PLT2 discloses a method for enhancing citrus fruitiness or preserving it for a long time using a liquid seasoning in a storage container, the liquid seasoning containing 10% to 59% (weight/weight) soy sauce, 1% to 13% (weight/weight) citrus juice, 5 wt% to 15 wt% salt, and 0.05 wt% to 2.5 wt% acetic acid.

However, these techniques merely involve a method in which sourness is counteracted with other taste components by adding tastes distinct from sourness to the sourness of acetic acid, and do not suppress or reduce oral pain itself caused by the acid in the food composition.

### Citation List

### Patent Literature

PTL 1: JP2014-008036A
PTL 2: JP2009-142194A

### Summary of Invention

### Technical Problem

The present invention was made in view of the above, and aims to provide a composition in which an oral pain caused by the acid in the food composition is suppressed, and a method for producing the food composition.

### Solution to Problem

As a result of extensive study in view of the above problem, the present inventor found that oral pain caused by the acid in a food composition can be suppressed by adjusting the particle size of particles contained in the food composition and the density of the food composition to fall within predetermined ranges. The present invention was thus completed. Specifically, the present invention provides the following.

[1] According to a first embodiment, the present invention provides a food composition having an acidity expressed as acetic acid described below, comprising particles having a number average particle size described below, and having a density described below at a temperature of 4 ± 1°C. The acidity expressed as acetic acid is 0.10 mass% or more, 0.11 mass% or more, 0.12 mass% or more, 0.14 mass% or more, 0.16 mass% or more, 0.18 mass% or more, 0.20 mass% or more, 0.21 mass% or more, 0.22 mass% or more, 0.24 mass% or more, 0.26 mass% or more, 0.28 mass% or more, 0.29 mass% or more, 0.30 mass% or more, 0.32 mass% or more, 0.34 mass% or more, 0.36 mass% or more, 0.38 mass% or more, 0.40 mass% or more, 0.45 mass% or more, 0.50 mass% or more, 0.55 mass% or more, 0.60 mass% or more, 0.65 mass% or more, 0.70 mass% or more, 0.75 mass% or more, 0.80 mass% or more, 0.85 mass% or more, 0.90 mass% or more, 0.95 mass% or more, 1.00 mass% or more, 1.20 mass% or more, 1.40 mass% or more, 1.60 mass% or more, 1.80 mass% or more, 2.00 mass% or more, 2.50 mass% or more, or 3.00 mass% or more. The upper limit is, for example, 20.00 mass% or less, 18.00 mass% or less, 16.00 mass% or less, 14.00 mass% or less, 12.00 mass% or less, 10.00 mass% or less, 9.00 mass% or less, 8.00 mass% or less, 7.00 mass% or less, 6.50 mass% or less, 6.00 mass% or less, 5.50 mass% or less, 5.00 mass% or less, 4.80 mass% or less, 4.60 mass% or less, 4.40 mass% or less, 4.20 mass% or less, 4.00 mass% or less, 3.50 mass% or less, 3.00 mass% or less, 2.50 mass% or less, 2.00 mass% or less, 1.50 mass% or less, 1.00 mass% or less, or 0.90 mass% or less. The range is, for example, 0.10 or more and 20.00 mass% or less, 0.10 mass% or more and 8.00 mass% or less, 0.16 mass% or more and 6.00 mass% or less, 0.10 mass% or more and 1.00 mass% or less, 1.00 mass% or more and 3.00 mass% or less, or 1.00 mass% or more and 6.00 mass% or less. The number average particle size of the particles contained in the food composition is 40.0 µm or less, 30.0 µm or less, 25.0 µm or less, 20.0 µm or less, 18.0 µm or less, 16.0 µm or less, 14.0 µm or less, 12.0 µm or less, 10.0 µm or less, 8.0 µm or less, 7.0 µm or less, 6.0 µm or less, 5.0 µm or less, 4.0 µm or less, 3.5 µm or less, 3.0 µm or less, 2.5 µm or less, 2.0 µm or less, 1.5 µm or less, 1.0 µm or less, 0.8 µm or less, or 0.7 µm or less. The lower limit is, for example, more than 0, 0.1 µm or more, 0.3 µm or more, or 0.4 µm or more. The range is, for example, more than 0 µm and not more than 40 µm. The density at a temperature of 4 ± 1°C is 1.20 g/cm³ or less, 1.15 g/cm³ or less, 1.13 g/cm³ or less, 1.12 g/cm³ or less, 1.10 g/cm³ or less, 1.09 g/cm³ or less, 1.08 g/cm³ or less, 1.06 g/cm³ or less, 1.05 g/cm³ or less, 1.04 g/cm³ or less, 1.03 g/cm³ or less, or 1.01 g/cm³ or less. The lower limit is, for example, 0.95 g/cm³ or more, 0.96 g/cm³ or more, 0.97 g/cm³ or more, 0.98 g/cm³ or more, 0.99 g/cm³ or more, or 1.00 g/cm³ or more. The range is, for example, 0.95 g/cm³ or more and 1.20 g/cm³ or less.
[2] According to a second embodiment, the present invention provides the food composition according to [1], comprising an organic acid in an amount described below based on 100 mass% of the food composition. The amount is 0.10 mass% or more, 0.15 mass% or more, 0.17 mass% or more, 0.20 mass% or more, 0.25 mass% or more, 0.27 mass% or more, 0.30 mass% or more, 0.35 mass% or more, 0.40 mass% or more, 0.45 mass% or more, 0.50 mass% or more, 0.55 mass% or more, 0.60 mass% or more, 0.70 mass% or more, 0.80 mass% or more, 0.90 mass% or more, 1.00 mass% or more, 1.10 mass% or more, 1.20 mass% or more, 1.30 mass% or more, 1.40 mass% or more, 1.50 mass% or more, 1.60 mass% or more, 1.70 mass% or more, 1.80 mass% or more, 1.90 mass% or more, 2.00 mass% or more, 2.10 mass% or more, 2.20 mass% or more, 2.30 mass% or more, 2.40 mass% or more, 2.50 mass% or more, 2.60 mass% or more, 2.70 mass% or more, 2.80 mass% or more, 2.90 mass% or more, 3.00 mass% or more, or 4.00 mass% or more. The upper limit is, for example, 18.00 mass% or less, 16.00 mass% or less, 15.50 mass% or less, 15.10 mass% or less, 14.90 mass% or less, 14.50 mass% or less, 14.30 mass% or less, 14.00 mass% or less, 13.50 mass% or less, 13.30 mass% or less, 13.00 mass% or less, 12.50 mass% or less, 12.00 mass% or less, 11.50 mass% or less, 11.00 mass% or less, 10.50 mass% or less, 10.30 mass% or less, 10.00 mass% or less, 9.80 mass% or less, 9.60 mass% or less, 9.40 mass% or less, 9.20 mass% or less, 9.00 mass% or less, 8.50 mass% or less, 8.20 mass% or less, 8.00 mass% or less, 7.50 mass% or less, 7.00 mass% or less, 6.70 mass% or less, 6.40 mass% or less, 6.20 mass% or less, 6.00 mass% or less, 5.50 mass% or less, 5.30 mass% or less, 5.20 mass% or less, 5.10 mass% or less, 5.00 mass% or less, 4.80 mass% or less, 4.60 mass% or less, 4.40 mass% or less, or 4.20 mass% or less. The range is, for example, 0.10 mass% or more and 18.00 mass% or less.
[3] According to a third embodiment, the present invention provides the food composition according to [2], wherein the organic acid is at least one selected from the group consisting of acetic acid, citric acid, malic acid, lactic acid, and tartaric acid.
[4] According to a fourth embodiment, the present invention provides the food composition according to any of [1] to [3], comprising fruit juice in an amount described below based on 100 mass% of the food composition. The amount is 0.50 mass% or more, 1.00 mass% or more, 3.00 mass% or more, 4.00 mass% or more, 5.00 mass% or more, 7.00 mass% or more, 10.00 mass% or more, 15.00 mass% or more, 18.00 mass% or more, 20.00 mass% or more, 23.00 mass% or more, 25.00 mass% or more, 30.00 mass% or more, 35.00 mass% or more, 40.00 mass% or more, 50.00 mass% or more, 60.00 mass% or more, or 70.00 mass% or more. The upper limit is, for example, 100 mass% or less, 90.00 mass% or less, 80.00 mass% or less, 70.00 mass% or less, 60.00 mass% or less, 50.00 mass% or less, 40.00 mass% or less, 30.00 mass% or less, 25.00 mass% or less, 23.00 mass% or less, 21.00 mass% or less, 20.00 mass% or less, 19.00 mass% or less, 18.00 mass% or less, 16.00 mass% or less, 14.00 mass% or less, 12.00 mass% or less, 11.00 mass% or less, or 10.00 mass% or less. The range is, for example, 0.50 mass% or more and 100 mass% or less.
[5] According to a fifth embodiment, the present invention provides the food composition according to [4], having a citric acid content derived from the fruit juice of 0.0001 mass% or more, 0.01 mass% or more, or 0.03 mass% or more, based on 100 mass% of the food composition.
[6] According to a sixth embodiment, the present invention provides the food composition according to [4] or [5], wherein the fruit juice comprises 50 mass% or more, 70 mass% or more, or 90 mass% or more of citrus juice, based on 100 mass% of the fruit juice.
[7] According to a seventh embodiment, the present invention provides the food composition according to [6], comprising, as the citrus juice, at least one citrus juice selected from the group consisting of lemon, yuzu, sudachi, lime, Satsuma mandarin, Kishu mandarin, orange, grapefruit, hassaku, calamansi, kabosu, daidai, and hyuganatsu.
[8] According to an eighth embodiment, the present invention provides the food composition according to any one of [1] to [7], having an X/Y ratio described below, wherein X is a maximum particle size of the particles contained in the food composition, and Y is the number average particle size. The X/Y ratio is 1000 or less, 900 or less, 800 or less, 700 or less, 600 or less, 500 or less, 400 or less, 300 or less, 250 or less, 200 or less, 150 or less, or 100 or less. The lower limit is, for example, more than 0, 0.5 or more, 1 or more, 2 or more, or 3 or more. The range is, for example, more than 0 and not more than 1000.
[9] According to a ninth embodiment, the present invention provides the food composition according to any one of [1] to [8], wherein the particles contained in the food composition have a specific surface area of 0.25 m²/mL or more, 0.30 m²/mL or more, or 0.40 m²/mL or more. The upper limit is, for example, 30.00 m²/mL or less, 20.00 m²/mL or less, 15.00 m²/mL or less, 13.00 m²/mL or less, 12.00 m²/mL or less, 11.00 m²/mL or less, 10.00 m²/mL or less, 9.00 m²/mL or less, 8.00 m²/mL or less, 7.00 m²/mL or less, or 6.00 m²/mL or less. The range is, for example, 0.25 m²/mL or more and 30.00 m²/mL or less.
[10] According to a tenth embodiment, the present invention provides the food composition according to any one of [1] to [9], wherein the rate of decrease in the number average particle size before and after subjecting the food composition to ultrasonic treatment is 200% or less, 190% or less, 180% or less, 170% or less, 160% or less, 150% or less, 140% or less, 130% or less, 120% or less, 110% or less, 60% or less, 55% or less, 50% or less, 45% or less, or 20% or less. The lower limit is, for example, 3% or more, 5% or more, or 10% or more. The range is, for example, 3% or more and 200% or less.
[11] According to an eleventh embodiment, the present invention provides the food composition according to any one of [1] to [10], wherein the particles contained in the food composition comprise particles derived from the citrus juice and/or emulsified particles.
[12] According to a twelfth embodiment, the present invention provides the food composition according to [11], comprising particles derived from at least one citrus juice selected from the group consisting of lemon, yuzu, sudachi, lime, Satsuma mandarin, Kishu mandarin, orange, grapefruit, hassaku, calamansi, kabosu, daidai, and hyuganatsu.
[13] According to a thirteenth embodiment, the present invention provides the food composition according to any one of [1] to [12], having a sugar-acid ratio of 15.0 or less, 14.0 or less, 12.0 or less, 11.0 or less, 10.0 or less, 9.0 or less, 8.5 or less, 8.0 or less, 6.0 or less, 5.0 or less, 4.0 or less, 3.0 or less, or 2.0 or less. The lower limit is, for example, 1.0 or more. The range is, for example, 1.0 or more and 15.0 or less.
[14] According to a fourteenth embodiment, the present invention provides the food composition according to any one of [1] to [13], having a sugar content of less than 15.0 mass%, less than 5.0 mass%, or less than 2.5 mass%, based on 100 mass% of the food composition. The lower limit is, for example, 0 mass% or more, 0.1 mass% or more, 0.2 mass% or more, or 0.4 mass% or more. The range is, for example, 0 mass% or more and less than 15.0 mass%.
[15] According to a fifteenth embodiment, the present invention provides the food composition according to any one of [1] to [14], having a lipid content of 10.0 mass% or less or 3.0 mass% or less, based on 100 mass% of the food composition. The lower limit is, for example, 0 mass% or more, 0.03 mass% or more, 0.05 mass% or more, 0.07 mass% or more, 0.10 mass% or more, 0.15 mass% or more, 0.20 mass% or more, or 0.25 mass% or more. The range is, for example, 0 mass% or more and 10.0 mass% or less.
[16] According to a sixteenth embodiment, the present invention provides the food composition according to any one of [1] to [15], having a moisture content on a wet-mass basis described below based on 100 mass% of the food composition. The moisture content on a wet-mass basis is 20.0 mass% or more, 40.0 mass% or more, 45.0 mass% or more, 50.0 mass% or more, 60.0 mass% or more, 70.0 mass% or more, 80.0 mass% or more, or 90.0 mass% or more. The upper limit is, for example, 99.7 mass% or less, 99.0 mass% or less, 98.0 mass% or less, 97.0 mass% or less, 96.0 mass% or less, 95.0 mass% or less, or 93.0 mass% or less. The range is, for example, 20.0 mass% or more and 99.7 mass% or less.
[17] According to a seventeenth embodiment, the present invention provides the food composition according to any one of [1] to [16], which is a beverage or a composition for preparing the beverage.
[18] According to an eighteenth embodiment, the present invention provides the food composition according to [17], wherein the beverage is a low-sugar beverage.
[19] According to a nineteenth embodiment, the present invention provides a method for producing a food composition, comprising the following steps (1) to (3).
   (1) A step of adjusting the acidity expressed as acetic acid to 0.10 mass% or more, 0.11 mass% or more, 0.12 mass% or more, 0.14 mass% or more, 0.16 mass% or more, 0.18 mass% or more, 0.20 mass% or more, 0.21 mass% or more, 0.22 mass% or more, 0.24 mass% or more, 0.26 mass% or more, 0.28 mass% or more, 0.29 mass% or more, 0.30 mass% or more, 0.32 mass% or more, 0.34 mass% or more, 0.36 mass% or more, 0.38 mass% or more, 0.40 mass% or more, 0.45 mass% or more, 0.50 mass% or more, 0.55 mass% or more, 0.60 mass% or more, 0.65 mass% or more, 0.70 mass% or more, 0.75 mass% or more, 0.80 mass% or more, 0.85 mass% or more, 0.90 mass% or more, 0.95 mass% or more, 1.00 mass% or more, 1.20 mass% or more, 1.40 mass% or more, 1.60 mass% or more, 1.80 mass% or more, 2.00 mass% or more, 2.50 mass% or more, or 3.00 mass% or more. The upper limit is, for example, 20.00 mass% or less, 18.00 mass% or less, 16.00 mass% or less, 14.00 mass% or less, 12.00 mass% or less, 10.00 mass% or less, 9.00 mass% or less, 8.00 mass% or less, 7.00 mass% or less, 6.50 mass% or less, 6.00 mass% or less, 5.50 mass% or less, 5.00 mass% or less, 4.80 mass% or less, 4.60 mass% or less, 4.40 mass% or less, 4.20 mass% or less, 4.00 mass% or less, 3.50 mass% or less, 3.00 mass% or less, 2.50 mass% or less, 2.00 mass% or less, 1.50 mass% or less, 1.00 mass% or less, or 0.90 mass% or less. The range is, for example, 0.10 or more and 20.00 mass% or less, 0.10 mass% or more and 8.00 mass% or less, 0.16 mass% or more and 6.00 mass% or less, 0.10 mass% or more and 1.00 mass% or less, 1.00 mass% or more and 3.00 mass% or less, or 1.00 mass% or more and 6.00 mass% or less.
   (2) A step of adding a particle component to obtain a number average particle size of 40.0 µm or less, 30.0 µm or less, 25.0 µm or less, 20.0 µm or less, 18.0 µm or less, 16.0 µm or less, 14.0 µm or less, 12.0 µm or less, 10.0 µm or less, 8.0 µm or less, 7.0 µm or less, 6.0 µm or less, 5.0 µm or less, 4.0 µm or less, 3.5 µm or less, 3.0 µm or less, 2.5 µm or less, 2.0 µm or less, 1.5 µm or less, 1.0 µm or less, 0.8 µm or less, or 0.7 µm or less. The lower limit is, for example, more than 0, 0.1 µm or more, 0.3 µm or more, or 0.4 µm or more. The range is, for example, more than 0 µm and not more than 40 µm.
   (3) A step of adjusting the density at a temperature of 4 ± 1°C to 1.20 g/cm³ or less, 1.15 g/cm³ or less, 1.13 g/cm³ or less, 1.12 g/cm³ or less, 1.10 g/cm³ or less, 1.09 g/cm³ or less, 1.08 g/cm³ or less, 1.06 g/cm³ or less, 1.05 g/cm³ or less, 1.04 g/cm³ or less, 1.03 g/cm³ or less, or 1.01 g/cm³ or less. The lower limit is, for example, 0.95 g/cm³ or more, 0.96 g/cm³ or more, 0.97 g/cm³ or more, 0.98 g/cm³ or more, 0.99 g/cm³ or more, or 1.00 g/cm³ or more. The range is, for example, 0.95 g/cm³ or more and 1.20 g/cm³ or less.
[20] According to a twentieth embodiment, the present invention provides a method for masking oral irritation from a highly acidic food composition, comprising adding particles having a number average particle size described below to the highly acidic food composition to adjust the density at a temperature of 4 ± 1°C to a value described below. The number average particle size is 40.0 µm or less, 30.0 µm or less, 25.0 µm or less, 20.0 µm or less, 18.0 µm or less, 16.0 µm or less, 14.0 µm or less, 12.0 µm or less, 10.0 µm or less, 8.0 µm or less, 7.0 µm or less, 6.0 µm or less, 5.0 µm or less, 4.0 µm or less, 3.5 µm or less, 3.0 µm or less, 2.5 µm or less, 2.0 µm or less, 1.5 µm or less, 1.0 µm or less, 0.8 µm or less, or 0.7 µm or less. The lower limit is, for example, more than 0, 0.1 µm or more, 0.3 µm or more, or 0.4 µm or more. The range is, for example, more than 0 µm and not more than 40 µm. The density at a temperature of 4 ± 1°C is adjusted to 1.20 g/cm³ or less, 1.15 g/cm³ or less, 1.13 g/cm³ or less, 1.12 g/cm³ or less, 1.10 g/cm³ or less, 1.09 g/cm³ or less, 1.08 g/cm³ or less, 1.06 g/cm³ or less, 1.05 g/cm³ or less, 1.04 g/cm³ or less, 1.03 g/cm³ or less, or 1.01 g/cm³ or less. The lower limit is, for example, 0.95 g/cm³ or more, 0.96 g/cm³ or more, 0.97 g/cm³ or more, 0.98 g/cm³ or more, 0.99 g/cm³ or more, or 1.00 g/cm³ or more. The range is, for example, 0.95 g/cm³ or more and 1.20 g/cm³ or less.
[21] According to a twenty-first embodiment, the present invention provides a method for suppressing oral irritation from a highly acidic food composition without using sugars, comprising adding particles having a number average particle size described below to the highly acidic food composition to adjust the density at a temperature of 4 ± 1°C to a value described below. The number average particle size is 40.0 µm or less, 30.0 µm or less, 25.0 µm or less, 20.0 µm or less, 18.0 µm or less, 16.0 µm or less, 14.0 µm or less, 12.0 µm or less, 10.0 µm or less, 8.0 µm or less, 7.0 µm or less, 6.0 µm or less, 5.0 µm or less, 4.0 µm or less, 3.5 µm or less, 3.0 µm or less, 2.5 µm or less, 2.0 µm or less, 1.5 µm or less, 1.0 µm or less, 0.8 µm or less, or 0.7 µm or less. The lower limit is, for example, more than 0, 0.1 µm or more, 0.3 µm or more, or 0.4 µm or more. The range is, for example, more than 0 µm and not more than 40 µm. The density at a temperature of 4 ± 1°C is adjusted to 1.20 g/cm³ or less, 1.15 g/cm³ or less, 1.13 g/cm³ or less, 1.12 g/cm³ or less, 1.10 g/cm³ or less, 1.09 g/cm³ or less, 1.08 g/cm³ or less, 1.06 g/cm³ or less, 1.05 g/cm³ or less, 1.04 g/cm³ or less, 1.03 g/cm³ or less, or 1.01 g/cm³ or less. The lower limit is, for example, 0.95 g/cm³ or more, 0.96 g/cm³ or more, 0.97 g/cm³ or more, 0.98 g/cm³ or more, 0.99 g/cm³ or more, or 1.00 g/cm³ or more. The range is, for example, 0.95 g/cm³ or more and 1.20 g/cm³ or less.
[22] According to a twenty-second embodiment, the present invention provides a method for reducing the sugar content of a highly acidic food composition, comprising adding particles having a number average particle size described below to the highly acidic food composition to adjust the density at a temperature of 4 ± 1°C to a value described below. The number average particle size is 40.0 µm or less, 30.0 µm or less, 25.0 µm or less, 20.0 µm or less, 18.0 µm or less, 16.0 µm or less, 14.0 µm or less, 12.0 µm or less, 10.0 µm or less, 8.0 µm or less, 7.0 µm or less, 6.0 µm or less, 5.0 µm or less, 4.0 µm or less, 3.5 µm or less, 3.0 µm or less, 2.5 µm or less, 2.0 µm or less, 1.5 µm or less, 1.0 µm or less, 0.8 µm or less, or 0.7 µm or less. The lower limit is, for example, more than 0, 0.1 µm or more, 0.3 µm or more, or 0.4 µm or more. The range is, for example, more than 0 µm and not more than 40 µm. The density at a temperature of 4 ± 1°C is adjusted to 1.20 g/cm³ or less, 1.15 g/cm³ or less, 1.13 g/cm³ or less, 1.12 g/cm³ or less, 1.10 g/cm³ or less, 1.09 g/cm³ or less, 1.08 g/cm³ or less, 1.06 g/cm³ or less, 1.05 g/cm³ or less, 1.04 g/cm³ or less, 1.03 g/cm³ or less, or 1.01 g/cm³ or less. The lower limit is, for example, 0.95 g/cm³ or more, 0.96 g/cm³ or more, 0.97 g/cm³ or more, 0.98 g/cm³ or more, 0.99 g/cm³ or more, or 1.00 g/cm³ or more. The range is, for example, 0.95 g/cm³ or more and 1.20 g/cm³ or less.

### Advantageous Effects of Invention

The present invention can provide a food composition in which oral pain caused by the acid in the food composition is suppressed. According to one embodiment, the present invention can provide a food composition having a smooth mouthfeel even when the food composition is a highly acidic food composition. According to another embodiment, the present invention can provide a food composition capable of suppressing oral pain while achieving a smooth mouthfeel. According to still another embodiment, the present invention can provide a food composition having a refreshing sour taste. According to yet still another embodiment, the present invention can provide a food composition having a reduced sugar content.

The present invention can also provide a method for producing these food compositions. Further, the present invention can provide a method for masking oral irritation from a highly acidic food composition, a method for suppressing oral irritation from a highly acidic food composition without using sugar, and a method for reducing the sugar content of a highly acidic food composition.

### Description of Embodiments

The present invention will be described in detail below with reference to specific embodiments. However, the present invention is not limited to the following embodiments, and may be carried out in any form without departing from the spirit of the present invention.

In the present specification, the term "food composition" is not particularly limited and may be understood in its ordinary meaning. Examples include processed food compositions, such as confectionery products, beverages, soups, main dishes, side dishes, and staple foods; compositions for preparing beverages; compositions for preparing processed food compositions such as seasonings; pet foods for companion animals (in particular, for dogs and cats); and feeds for livestock.

In the present specification, the expression "the oral pain caused by the acid" refers to oral pain that occurs upon intake of a food composition containing an acid. Such pain is considered to be induced by a tingling sensation felt on the tongue and a sensation of tightness in the cheeks. Although the detailed mechanism is unknown, it is presumed that acids act on certain receptors or cells in the oral cavity, thereby producing the above-described sensations, which are perceived as pain.

In the present specification, the terms "include," "contain," and variations thereof express concepts that encompass all of "comprise," "consist essentially of," and "consist of." When the terms "include," "contain," and variations thereof are used, the listed steps or options are not necessarily exhaustive.

In the present invention, values expressed by the terms "mass%," "ppm by mass," and "ppb by mass" represent values on "a wet-mass basis." The term "a wet-mass basis" refers to the content ratio of a target component in a sample, calculated using, as the denominator, the wet mass of the sample including moisture and, as the numerator, the mass of the target component contained in the sample. In the present invention, when expressed in "mass%," the value is based on the mass (g) of the target component contained in 100 g of the sample, and may also be read as w/w%. Further, when expressed in "ppm by mass," the value is based on the mass (mg) of the target component contained in 1 kg of the sample. When expressed in "ppb by mass," the value is based on the mass (µg) of the target component contained in 1 kg of the sample.

In the present specification, where multiple upper limits and/or multiple lower limits are provided for defining a numerical range, unless otherwise expressly specified, a numerical range defined by combining the maximum upper limit with the minimum lower limit shall be deemed to be directly disclosed. Furthermore, all numerical ranges obtained by combining any one of the upper limits with any one of the lower limits shall be encompassed by an embodiment of the present invention.

### Food composition

A first aspect of the present invention relates to a food composition having an acidity, expressed as acetic acid, of 0.10 mass% or more, comprising particles having a number average particle size of 40.0 µm or less, and having a density of 1.20 g/cm³ or less at a temperature of 4 ± 1°C.

### Acidity expressed as acetic acid

The food composition of the present invention has a certain acidity. Since the food composition has a certain acidity, the food composition has a refreshing sour taste, and can be expected to provide health benefits, such as recovery from fatigue and reduction of visceral fat. In the present invention, the food composition has an acidity, expressed as acetic acid, of 0.10 mass% or more. When the acidity expressed as acetic acid is less than 0.10 mass%, the refreshing sour taste cannot be perceived as a flavor, and oral pain, which is a problem addressed by the present invention, is less perceptible.

The lower limit of the acidity expressed as acetic acid may be, for example, 0.10 mass% or more, 0.11 mass% or more, 0.12 mass% or more, 0.14 mass% or more, 0.16 mass% or more, 0.18 mass% or more, 0.20 mass% or more, 0.21 mass% or more, 0.22 mass% or more, 0.24 mass% or more, 0.26 mass% or more, 0.28 mass% or more, 0.29 mass% or more, 0.30 mass% or more, 0.32 mass% or more, 0.34 mass% or more, 0.36 mass% or more, 0.38 mass% or more, 0.40 mass% or more, 0.45 mass% or more, 0.50 mass% or more, 0.55 mass% or more, 0.60 mass% or more, 0.65 mass% or more, 0.70 mass% or more, 0.75 mass% or more, 0.80 mass% or more, 0.85 mass% or more, 0.90 mass% or more, 0.95 mass% or more, 1.00 mass% or more, 1.20 mass% or more, 1.40 mass% or more, 1.60 mass% or more, 1.80 mass% or more, 2.00 mass% or more, 2.50 mass% or more, or 3.00 mass% or more. The upper limit is not particularly limited, and may be, for example, 20.00 mass% or less, 18.00 mass% or less, 16.00 mass% or less, 14.00 mass% or less, 12.00 mass% or less, 10.00 mass% or less, 9.00 mass% or less, 8.00 mass% or less, 7.00 mass% or less, 6.50 mass% or less, 6.00 mass% or less, 5.50 mass% or less, 5.00 mass% or less, 4.80 mass% or less, 4.60 mass% or less, 4.40 mass% or less, 4.20 mass% or less, 4.00 mass% or less, 3.50 mass% or less, 3.00 mass% or less, 2.50 mass% or less, 2.00 mass% or less, 1.50 mass% or less, 1.00 mass% or less, or 0.90 mass% or less.

The range of the acidity expressed as acetic acid may be preferably 0.10 or more and 20.00 mass% or less, more preferably 0.10 mass% or more and 8.00 mass% or less, and even more preferably 0.16 mass% or more and 6.00 mass% or less. However, when the food composition of the present invention is a beverage, the acidity expressed as acetic acid is particularly preferably 0.10 mass% or more and 1.00 mass% or less from the viewpoint of allowing a moderate acidity to be perceived as refreshing. When the food composition of the present invention is a composition for preparing the beverage, the acidity expressed as acetic acid is particularly preferably 1.00 mass% or more and 3.00 mass% or less from the viewpoint of allowing a moderate acidity to be perceived as refreshing upon dilution, and from the viewpoint of imparting storage stability. Further, when the food composition of the present invention is a seasoning, the acidity expressed as acetic acid is particularly preferably 1.00 mass% or more and 6.00 mass% or less from the viewpoint of not impairing a moderate acidity by the flavor of an ingredient to be added.

### Acidity measurement method

The acidity is measured in accordance with the measurement method of the "acidity" defined in the Japanese Agricultural Standards (Ministry of Agriculture, Forestry and Fisheries Notification No. 1626, issued on December 13, 2019) for brewed vinegar. Specifically, the hydrogen ion concentration in the sample is determined by neutralization titration, and the resulting value is multiplied by the molecular weight of acetic acid (60.05 g/mol), which is a monovalent carboxylic acid.

### Acidic component

The acidity of the food composition can be adjusted using organic acids and/or inorganic acids (e.g., phosphoric acid and nitric acid). In particular, adding an organic acid to the food composition is preferred from the viewpoint of providing the health benefits of organic acids, such as recovery from fatigue and prevention of anemia, and imparting seasoning effects of organic acids.

### Organic acid

In the present invention, the term "organic acid" refers to a general term for organic compounds that exhibit acidity. The organic acid contained in the food composition of the present invention is not particularly limited. Examples include carboxylic acid. More specific examples include acetic acid, citric acid, malic acid, lactic acid, gluconic acid, tartaric acid, formic acid, propionic acid, butyric acid, valeric acid, isovaleric acid, caproic acid, and fumaric acid. The food composition preferably contains at least one selected from the group consisting of those mentioned above, and more preferably contains at least one selected from the group consisting of acetic acid, citric acid, malic acid, lactic acid, and tartaric acid.

The lower limit of the organic acid contained in the food composition of the present invention is not particularly limited for each individual organic acid content (e.g., the content of acetic acid, citric acid, malic acid, lactic acid, gluconic acid, tartaric acid, formic acid, propionic acid, butyric acid, valeric acid, isovaleric acid, caproic acid, or fumaric acid), as long as the requirement for the acidity expressed as acetic acid is satisfied. When the total organic acid content based on 100 mass% of the food composition is 0.10 mass% or more, the refreshing sour taste may be perceived as a flavor, while oral pain, which is a problem addressed by the present invention, may also be perceived.

Specifically, in the food composition of the present invention, the lower limit of the individual organic acid content may be 0.10 mass% or more, 0.15 mass% or more, 0.17 mass% or more, 0.20 mass% or more, 0.25 mass% or more, 0.27 mass% or more, 0.30 mass% or more, 0.35 mass% or more, 0.40 mass% or more, 0.45 mass% or more, 0.50 mass% or more, 0.55 mass% or more, 0.60 mass% or more, 0.70 mass% or more, 0.80 mass% or more, 0.90 mass% or more, 1.00 mass% or more, 1.10 mass% or more, 1.20 mass% or more, 1.30 mass% or more, 1.40 mass% or more, 1.50 mass% or more, 1.60 mass% or more, 1.70 mass% or more, 1.80 mass% or more, 1.90 mass% or more, 2.00 mass% or more, 2.10 mass% or more, 2.20 mass% or more, 2.30 mass% or more, 2.40 mass% or more, 2.50 mass% or more, 2.60 mass% or more, 2.70 mass% or more, 2.80 mass% or more, 2.90 mass% or more, 3.00 mass% or more, or 4.00 mass% or more. The upper limit may be 18.00 mass% or less, 16.00 mass% or less, 15.50 mass% or less, 15.10 mass% or less, 14.90 mass% or less, 14.50 mass% or less, 14.30 mass% or less, 14.00 mass% or less, 13.50 mass% or less, 13.30 mass% or less, 13.00 mass% or less, 12.50 mass% or less, 12.00 mass% or less, 11.50 mass% or less, 11.00 mass% or less, 10.50 mass% or less, 10.30 mass% or less, 10.00 mass% or less, 9.80 mass% or less, 9.60 mass% or less, 9.40 mass% or less, 9.20 mass% or less, 9.00 mass% or less, 8.50 mass% or less, 8.20 mass% or less, 8.00 mass% or less, 7.50 mass% or less, 7.00 mass% or less, 6.70 mass% or less, 6.40 mass% or less, 6.20 mass% or less, 6.00 mass% or less, 5.50 mass% or less, 5.30 mass% or less, 5.20 mass% or less, 5.10 mass% or less, 5.00 mass% or less, 4.80 mass% or less, 4.60 mass% or less, 4.40 mass% or less, or 4.20 mass% or less. The range may be, for example, 0.10 mass% or more and 18.00 mass% or less.

In addition, according to one embodiment of the present invention, the above requirement may be satisfied by the organic acid with the highest content among the organic acids contained in the food composition of the present invention (e.g., acetic acid, citric acid, malic acid, lactic acid, gluconic acid, tartaric acid, formic acid, propionic acid, butyric acid, valeric acid, isovaleric acid, caproic acid, and fumaric acid). Further, according to one embodiment of the present invention, the total organic acid content may satisfy the above requirement.

When the food composition of the present invention contains two or more organic acids, examples of the acid with the highest content include the organic acids described above (e.g., acetic acid, citric acid, malic acid, lactic acid, gluconic acid, tartaric acid, formic acid, propionic acid, butyric acid, valeric acid, isovaleric acid, caproic acid, and fumaric acid). Among these, it is preferable that acetic acid or citric acid be present in the largest amount, and it is particularly preferable that acetic acid be present in the largest amount.

The organic acid content is measured in accordance with the "organic acid" measurement method prescribed in the Standard Tables of Food Composition in Japan, 2015 Edition (7th Revised Edition) by high-performance liquid chromatography (HPLC) or an enzymatic method.

### Acetic acid

The food composition of the present invention preferably contains acetic acid among the organic acids. Acetic acid is known to have functions such as reducing visceral fat, preventing hypertension, and suppressing postprandial increases in blood glucose levels, and is therefore useful for preventing or ameliorating various lifestyle-related diseases. On the other hand, acetic acid among the organic acids is also known to be particularly likely to cause oral pain, and may be a major cause of the problem addressed by the present invention. Here, the term "acetic acid" refers to acetic acid molecules (CH₃COOH) and acetate ions (CH₃COO-), and the term "acetic acid content" refers to the total concentration thereof. In one embodiment in which the food composition of the present invention contains acetic acid, the acetic acid content of the food composition need only satisfy the above-described numerical range for the organic acid content.

In one embodiment in which the food composition of the present invention contains acetic acid, the food composition preferably contains acetic acid produced by subjecting alcohol to acetic acid fermentation, and may contain acetic acid produced by subjecting a material, such as fruit or grain, to alcoholic fermentation with yeast, followed by acetic acid fermentation with acetic acid bacteria. Specifically, the food composition preferably contains brewed vinegar defined in the Japanese Agricultural Standards for brewed vinegar (Ministry of Agriculture, Forestry and Fisheries Notification No. 1626, issued on December 13, 2019). More specifically, the food composition preferably contains grain vinegar or fruit vinegar. For example, the food composition may contain at least one or two or more selected from the group consisting of rice vinegar, black rice vinegar, apple vinegar, grape vinegar, lemon vinegar, tomato vinegar, and pomegranate vinegar.

The proportion of acetic acid obtained by acetic acid fermentation is preferably 70 mass% or more, more preferably 90 mass% or more, even more preferably 99 mass% or more, based on 100 mass% of acetic acid in the food composition. The proportion may be 100 mass%. The acetic acid content of the food composition of the present invention is measured in accordance with the "organic acid" measurement method prescribed in the Standard Tables of Food Composition in Japan, 2015 Edition (7th Revised Edition) by high-performance liquid chromatography.

When the food composition of the present invention contains brewed vinegar, examples of raw materials of the brewed vinegar include white rice, brown rice, barley, wheat, oats, rye, common oat, Job's tears, corn, apple, peach, grape, acerola, blueberry, pear, apricot, citrus fruits (orange, lemon, yuzu, kabosu, sudachi, lime, mandarin orange, grapefruit, pink grapefruit, hassaku, calamansi, etc.), strawberry, pineapple, banana, melon, kiwifruit, blackcurrant, apricot, guava, plum, mango, papaya, lychee, ume, pomegranate, acai, raspberry, white grape, bergamot, and passion fruit. Thus, the food composition of the present invention may contain brewed vinegar made from at least one, two, three, four, or five or more kinds of plants as raw materials selected from the group consisting of white rice, brown rice, barley, wheat, oats, rye, common oat, Job's tears, corn, apple, peach, grape, acerola, blueberry, pear, apricot, citrus fruits (orange, lemon, yuzu, kabosu, sudachi, lime, mandarin orange, grapefruit, pink grapefruit, hassaku, calamansi, etc.), strawberry, pineapple, banana, melon, kiwifruit, blackcurrant, apricot, guava, plum, mango, papaya, lychee, ume, pomegranate, acai, raspberry, white grape, bergamot, and passion fruit. The food composition may contain at least one, two, three, four, or five or more kinds of the brewed vinegars described above. The food composition may further contain brewed vinegar obtainable by a step of adding brewing alcohol and performing acetic acid fermentation.

### Fruit juice

The food composition of the present invention preferably contains fruit juice. The food composition of the present invention can suppress oral pain. Thus, when the food composition contains fruit juice, the flavor of the fruit juice can be perceived as richer. In the present invention, the term "fruit juice" refers to juice obtained by squeezing a fruit (flesh and/or peel) or the liquid portion of a fruit obtained by extraction or the like. When a puree or grated product obtained by straining or grating fruit is used, the term means the liquid portion thereof. There are two kinds of fruit juices: a suspended fruit juice containing suspended matter derived from fruit peel and the like; and a clarified juice from which such suspended matter has been removed. Both kinds of fruit juices can be used in the food composition of the present invention.

Examples of fruit juices contained in the food composition of the present invention include citrus juice, apple juice, pineapple juice, peach juice, grape juice, strawberry juice, pear juice, banana juice, kiwifruit juice, blackcurrant juice, acerola juice, blueberry juice, raspberry juice, persimmon juice, apricot juice, guava juice, plum juice, mango juice, papaya juice, lychee juice, watermelon juice, melon juice, and pomegranate juice. One or two or more of these fruit juices may be used. The fruit juice may be used in a processed form, such as a frozen, concentrated, or reconstituted form.

### Citrus juice

The food composition of the present invention particularly preferably contains citrus fruit juice as the fruit juice. When citrus juice is contained, the rich flavor unique to the fruit juice can be perceived more strongly. Although the detailed mechanism is unknown, since the food composition of the present invention can suppress oral pain, it is presumed that, particularly when the food composition contains a highly acidic fruit juice such as citrus juice, the flavor of the fruit juice can be perceived more strongly while oral pain is suppressed.

For example, the food composition contains, as the citrus juice, at least one selected from the group consisting of lemon, yuzu, sudachi, lime, Satsuma mandarin, Kishu mandarin, orange, grapefruit, hassaku, calamansi, kabosu, daidai, and hyuganatsu. Among these, the presence of at least one selected from the group consisting of lemon, yuzu, Satsuma mandarin, Kishu mandarin, grapefruit, and hyuganatsu is preferred, and the presence of yuzu juice and/or lemon juice is more preferred.

### Fruit juice content

The fruit juice content (on a single-strength juice basis) in the food composition of the present invention is preferably 0.50 mass% or more, more preferably 1.00 mass% or more, and even more preferably 3.00 mass% or more, based on 100 mass% of the food composition. When the fruit juice content is 0.50 mass% or more, the flavor of the fruit juice can be perceived as richer. According to one embodiment of the present invention, the fruit juice content (on a single-strength juice basis) is 4.00 mass% or more, 5.00 mass% or more, 7.00 mass% or more, 10.00 mass% or more, 15.00 mass% or more, 18.00 mass% or more, 20.00 mass% or more, 23.00 mass% or more, 25.00 mass% or more, 30.00 mass% or more, 35.00 mass% or more, 40.00 mass% or more, 50.00 mass% or more, 60.00 mass% or more, or 70.00 mass% or more. The upper limit may be 100 mass% or less, 90.00 mass% or less, 80.00 mass% or less, 70.00 mass% or less, 60.00 mass% or less, 50.00 mass% or less, 40.00 mass% or less, 30.00 mass% or less, 25.00 mass% or less, 23.00 mass% or less, 21.00 mass% or less, 20.00 mass% or less, 19.00 mass% or less, 18.00 mass% or less, 16.00 mass% or less, 14.00 mass% or less, 12.00 mass% or less, 11.00 mass% or less, or 10.00 mass% or less. The range may be 0.50 mass% or more and 100 mass% or less. When two or more kinds of fruit juices are contained, the total content of the fruit juices is defined as the fruit juice content. According to one embodiment of the present invention, even when two or more kinds of fruit juices are contained, the content ratio of each fruit juice may satisfy the requirement for the "fruit juice content (on a single-strength juice basis) in the food composition" described above. However, in this case, the fruit juice content (on a single-strength juice basis; total fruit juice content) of the food composition is preferably 100 mass% or less.

Here, the expression "fruit juice content (on a single-strength juice basis)" refers to the mass percent concentration, with the single-strength juice obtained by squeezing the fruit taken as 100%. The fruit juice content can be calculated by multiplying the content ratio (mass%) of the fruit juice contained in the food composition by the concentration factor of the fruit juice. For example, when fivefold concentrated apple juice is added such that its content in the food composition is 10 mass%, the fruit juice content (on a single-strength juice basis) is 50 mass%. In addition, the concentration factor of each fruit juice can be calculated, for example, based on the minimum standard Brix or acidity value for single-strength juice of each fruit specified in the JAS standards (the Japanese Agricultural Standards for fruit beverages, Ministry of Agriculture, Forestry and Fisheries Notification No. 3118, issued on December 24, 2013).

### Citric acid content derived from fruit juice

When the food composition of the present invention contains fruit juice, the citric acid content derived from the fruit juice is preferably 0.0001 mass% or more, more preferably 0.01 mass% or more, and even more preferably 0.03 mass% or more, based on 100 mass% of the food composition. When the citric acid content derived from the fruit juice is 0.0001 mass% or more, the fruitiness is enhanced. When two or more kinds of fruit juices are contained, the total content of citric acid derived from each fruit juice is defined as the citric acid content derived from the fruit juice.

### Citrus juice content

The citrus juice content of the food composition of the present invention is preferably 50 mass% or more, more preferably 70 mass% or more, and even more preferably 90 mass% or more, based on 100 mass% of the total fruit juice including non-citrus juice(s). When the citrus juice content is 50 mass% or more, the rich flavor unique to the fruit juice can be perceived more strongly. When two or more kinds of citrus juices are contained, the citrus juice content is calculated using the total content of the respective citrus juices as the numerator and the total content of all fruit juices as the denominator.

According to one embodiment of the present invention, the food composition of the present invention may contain a dietary fiber-rich portion of an edible plant. In the present specification, as long as the edible plant is an edible ingredient, any ingredient can be used. Examples include cereals, mixed grains, tuber crops, legumes, nuts and seeds, vegetables, fruits, mushrooms, and seaweeds. Examples also include plant-based ingredients listed in the food group classification described in the Standard Tables of Food Composition in Japan, 2020 Edition (8th Revised Edition). Other examples include edible wild plants commonly consumed as vegetables (e.g., plantain, bracken, butterbur, and mugwort) and trees. In the food composition of the present invention, the expression "a dietary fiber-rich portion of an edible plant" refers to, for example, a portion having a higher dietary fiber content than the edible portion of an edible plant. In one example, the dietary fiber-rich portion usually has, in a dry state, a dietary fiber content of, for example, 1.1 times or more, 1.2 times or more, 1.3 times or more, 1.4 times or more, 1.5 times or more, 1.6 times or more, 1.7 times or more, 1.8 times or more, 1.9 times or more, or 2.0 times or more that of the edible portion. For example, the following portions also correspond to dietary fiber-rich portions of edible plants: in legumes, a seed coat portion having a dietary fiber content higher than that of the edible portion (cotyledon portion) (more specifically, an insoluble dietary fiber-rich portion and/or a high-molecular-weight water-soluble dietary fiber-rich portion); in mixed grains, a bran portion having a dietary fiber content higher than that of the edible portion (more specifically, an insoluble dietary fiber-rich portion and/or a high-molecular-weight water-soluble dietary fiber-rich portion); and in citrus fruits, a fruit peel and/or segment membrane having a dietary fiber content higher than that of the edible portion (more specifically, an insoluble dietary fiber-rich portion and/or a high-molecular-weight water-soluble dietary fiber-rich portion). Processed products of those mentioned above (e.g., fermented products) also correspond to dietary fiber-rich portions of edible plants. In the present disclosure, inedible portions of edible plants also correspond to dietary fiber-rich portions. A person skilled in the art who handles the food or its processed products can readily understand the non-edible portions and their proportions. For example, a skilled person may refer to the "refuse portion" and "refuse rate" described in the Standard Tables of Food Composition in Japan, 2015 Edition (7th Revised Edition) and treat the refuse portion and refuse rate as the inedible portion and the inedible proportion, respectively. A person skilled in the art who handles the food or its processed products can readily understand the non-edible portions and their proportions in edible plants for use in the present invention. For example, a skilled person may refer to the "refuse portion" and "refuse rate" described in the Standard Tables of Food Composition in Japan, 2015 Edition (7th Revised Edition) and treat the refuse portion and refuse rate as the inedible portion and the inedible proportion, respectively. When the food composition of the present invention contains a dietary fiber-rich portion of an edible plant, the content may be, for example, 0.05 mass% or more, 0.1 mass% or more, 0.3 mass% or more, 0.5 mass% or more, 0.7 mass% or more, 1.0 mass% or more, 1.5 mass% or more, 2.0 mass% or more, 2.5 mass% or more, or 3.0 mass% or more, based on 100 mass% of the food composition. The upper limit may be, for example, 30 mass% or less, 25 mass% or less, 20 mass% or less, 15 mass% or less, 10 mass% or less, 7.0 mass% or less, or 5.0 mass% or less. The range may be, for example, 0.05 mass% or more and 30.0 mass% or less.

According to one embodiment of the present invention, the food composition of the present invention may contain a fruit peel and/or segment membrane of a fruit (in particular, a citrus fruit) as a dietary fiber-rich portion of an edible plant. This can make the flavor of the composition more vibrant. Although the underlying mechanism is unknown, for example, while a citrus fruit peel contains various aroma components, it is presumed that the food composition of the present invention allows a retronasal flavor to be more strongly perceived because the particles partially block receptors in the oral cavity, enabling the perception of a vibrant flavor as a result. In this embodiment, the food composition may contain a fruit peel and/or segment membrane of a fruit (in particular, a citrus fruit) in an amount of 50 mass% or more and 100 mass% or less, or 70 mass% or more and 100 mass% or less, based on the total amount of dietary fiber-rich portions of edible plants contained in the food composition. The lower limit may be, for example, 50 mass% or more, 60 mass% or more, 70 mass% or more, or 80 mass% or more. The upper limit may be, for example, 100 mass%, 99 mass% or less, 95 mass% or less, or 90 mass% or less. The food composition may contain a processed product (particularly preferably a fermented product) of a fruit peel and/or segment membrane of a fruit (in particular, a citrus fruit) in an amount within the above range.

### Number average particle size of the particles contained in the food composition

The upper limit of the number average particle size of the particles contained in the food composition of the present invention is 40.0 µm or less, preferably 20.0 µm or less, more preferably 5.0 µm or less, and even more preferably 1.5 µm or less. When the upper limit is more than 40.0 µm, oral pain cannot be suppressed. According to one embodiment of the present invention, the upper limit of the number average particle size may be, for example, 30.0 µm or less, 25.0 µm or less, 18.0 µm or less, 16.0 µm or less, 14.0 µm or less, 12.0 µm or less, 10.0 µm or less, 8.0 µm or less, 7.0 µm or less, 6.0 µm or less, 4.0 µm or less, 3.5 µm or less, 3.0 µm or less, 2.5 µm or less, 2.0 µm or less, 1.0 µm or less, 0.8 µm or less, or 0.7 µm or less. The lower limit is usually more than 0, preferably 0.1 µm or more, more preferably 0.3 µm or more, and even more preferably 0.4 µm or more. When the lower limit is 0.1 µm or more, oral pain can be sufficiently suppressed. From the above viewpoint, the range is preferably more than 0 µm and not more than 40 µm.

When the number average particle size of the particles contained in the food composition is adjusted to the above range, oral pain is suppressed. Although the detailed mechanism is unknown, it is presumed that when the number average particle size of the particles contained in the food composition is adjusted, the particles can efficiently cover sour taste receptors in the oral cavity, so that the likelihood of the sour taste component coming into contact with sour taste receptors in the oral cavity is reduced and pain can be alleviated.

In the present invention, the expression "number average particle size of the particles contained in the food composition" refers to the average particle size of individual particles, as determined from the respective channels of the particle size distribution obtained by measuring the food composition of the present invention after ultrasonic treatment using the above-described laser diffraction particle size distribution analyzer, assuming that each particle is spherical. The number of particles on the assumption that each particle is spherical can be calculated using the above-described laser diffraction particle size distribution analyzer and measurement application software.

In addition to the above-described number-average particle size, for example, the particle size per unit volume (1 mL) on the assumption that each particle is spherical may be adopted as the particle size of the sample in some cases. However, particles having different diameters are treated equally in the calculation of the number average particle size. Thus, for example, in a food composition containing a large number of small-diameter particles and a small number of large-diameter particles, the number average particle size is smaller than the particle size per unit volume (1 mL).

### Variation in particle size of the particles contained in the food composition

When the maximum particle size of the particles contained in the food composition of the present invention is represented by X, and the number average particle size is represented by Y, the X/Y ratio is preferably 1000 or less, more preferably 600 or less, and even more preferably 400 or less. When the X/Y ratio is 1000 or less, the food composition has a smoother mouthfeel. According to one embodiment of the present invention, when the maximum particle size of the particles contained in the food composition of the present invention is represented by X, and the number average particle size is represented by Y, the X/Y ratio may be, for example, 900 or less, 800 or less, 700 or less, 500 or less, 300 or less, 250 or less, 200 or less, 150 or less, or 100 or less. The lower limit is usually more than 0 and may be 0.5 or more, 1 or more, 2 or more, or 3 or more. The range is preferably more than 0 and not more than 1000.

### Maximum particle size of the particles contained in the food composition

The upper limit of the maximum particle size of the particles contained in the food composition of the present invention is, for example, preferably 2000 µm or less, more preferably 1200 µm or less, and even more preferably 500 µm or less. The lower limit is, for example, preferably 0.1 µm or more, more preferably 0.5 µm or more, and even more preferably 1.5 µm or more. According to one embodiment of the present invention, the upper limit of the maximum particle size of the particles may be, for example, 1800 µm or less, 1600 µm or less, 1400 µm or less, 1000 µm or less, 900 µm or less, 800 µm or less, 700 µm or less, 600 µm or less, 400 µm or less, 300 µm or less, 200 µm or less, 100 µm or less, 80 µm or less, 60 µm or less, or 40 µm or less. The lower limit is usually more than 0 µm, and may be 1 µm or more, 2 µm or more, 3 µm or more, 4 µm or more, 5 µm or more, 6 µm or more, 7 µm or more, 8 µm or more, 9 µm or more, 10 µm or more, 15 µm or more, 20 µm or more, 25 µm or more, or 30 µm or more. The range is preferably more than 0 µm and not more than 2000 µm.

In the present invention, the expression "maximum particle size of the particles contained in the food composition" refers to the particle size corresponding to the channel representing the largest particle size among the channels of the particle size distribution obtained by measuring the food composition of the present invention after ultrasonic treatment using the above-described laser diffraction particle size distribution analyzer.

### Specific surface area of the particles contained in the food composition

The lower limit of the specific surface area of the particles contained in the food composition of the present invention is preferably 0.25 m²/mL or more, more preferably 0.30 m²/mL or more, and even more preferably 0.40 m²/mL or more. The upper limit is preferably 30.00 m²/mL or less, more preferably 20.00 m²/mL or less, and even more preferably 15.00 m²/mL or less. When the specific surface area is 0.25 m²/mL or more, the food composition has a smoother mouthfeel. Further, when the above-described X/Y ratio is satisfied, the food composition has an even smoother mouthfeel. As a result, oral pain can be suppressed while achieving a smooth mouthfeel. According to one embodiment of the present invention, the upper limit of the specific surface area of the particles contained in the food composition of the present invention may be, for example, 13.00 m²/mL or less, 12.00 m²/mL or less, 11.00 m²/mL or less, 10.00 m²/mL or less, 9.00 m²/mL or less, 8.00 m²/mL or less, 7.00 m²/mL or less, or 6.00 m²/mL or less. The range is preferably 0.25 m²/mL or more and 30.00 m²/mL or less.

In the present invention, the expression "specific surface area (m²/mL) of the particles contained in the food composition" refers to the surface area per unit volume (1 mL), as determined by measuring the food composition of the present invention using the above-described laser diffraction particle size distribution analyzer, assuming that each particle is spherical. Specifically, the specific surface area per unit volume on the assumption that each particle is spherical can be determined by 6 × Σ(ai) ÷ Σ(ai·di), wherein ai is the surface area of an individual particle, and di is the particle size.

### Particle size measurement method

In the present invention, the expressions "number average particle size," "maximum particle size," "specific surface area," and "mode diameter" of the particles contained in the food composition refer to values obtained by measuring the particle size after subjecting the sample to ultrasonic treatment. Since ultrasonic treatment breaks up aggregates of multiple particles, the particle size of the particles contained in the food composition can be measured more accurately than when no ultrasonic treatment is performed.

The particle size is measured using a laser diffraction particle size distribution analyzer. As the laser diffraction particle size distribution analyzer, for example, the Microtrac MT3300 EXII system available from MicrotracBEL Corp. can be used. Distilled water is used as the solvent during measurement, and Data Management System version 2 (DMS2, MicrotracBEL Corp.) can be used as the measurement application software. If distilled water is not used as the measurement solvent, the properties of the particles in the seasoning change, making the measured values unsuitable for use as the indices of the present invention. Therefore, the measurement is always performed using distilled water as the solvent.

In the measurement, washing is performed by pressing the washing button on the measurement application software. Then, the Set Zero button on the same software is pressed to set zero, and a sample can be directly introduced until the concentration falls within an appropriate range during sample loading. After the concentration falls within the range, a sample not subjected to ultrasonic treatment is measured by laser diffraction at a flow rate of 50% for 10 seconds, and the thus obtained values are used as the measured values. In contrast, for a sample subjected to ultrasonic treatment, the ultrasonication button on the same software is pressed to perform ultrasonication at 40 kHz and 30 W for 180 seconds, followed by defoaming treatment three times. The sample is then measured by laser diffraction at a flow rate of 50% for 10 seconds, and the thus obtained values can be used as the measured values. The measurement may also be performed under the conditions of distribution display: volume; particle refractive index: 1.60; solvent refractive index: 1.333; upper measurement limit (µm): 2000.000 µm; and lower measurement limit (µm): 0.021 µm.

In measuring the particle size distribution for each channel (CH) in the present invention, measurement may be performed on a volume basis using, as standards, the particle sizes for the respective measurement channels shown in Table 1. The particle size assigned to each channel may also be referred to as the "particle size of channel **." For each channel, the frequency of particles having a particle size equal to or smaller than the particle size assigned to the channel and larger than the particle size assigned to the next higher-numbered channel (or, in the case of the maximum channel within the measurement range, larger than the lower measurement limit particle size) is determined. The particle frequency % for each channel can then be calculated using the total frequency of all channels within the measurement range as the denominator (also referred to as the "particle frequency % of channel **"). For example, the particle frequency % of channel 1 represents the frequency % of particles having a particle size of 2000.000 µm or less and more than 1826.000 µm.

**[Table 1]**

| Channel | Particle size (µm) | Channel | Particle size (µm) | Channel | Particle size (µm) | Channel | Particle size (µm) | Channel | Particle size (µm) | Channel | Particle size (µm) |
|---|---|---|---|---|---|---|---|---|---|---|---|
| 1 | 2000.000 | 23 | 296.000 | 45 | 44.000 | 67 | 6.541 | 89 | 0.972 | 111 | 0.145 |
| 2 | 1826.000 | 24 | 271.400 | 46 | 40.350 | 68 | 5.998 | 90 | 0.892 | 112 | 0.133 |
| 3 | 1674.000 | 25 | 248.900 | 47 | 37.000 | 69 | 5.500 | 91 | 0.818 | 113 | 0.122 |
| 4 | 1535.000 | 26 | 228.200 | 48 | 33.960 | 70 | 5.044 | 92 | 0.750 | 114 | 0.111 |
| 5 | 1408.000 | 27 | 209.300 | 49 | 31.110 | 71 | 4.625 | 93 | 0.688 | 115 | 0.102 |
| 6 | 1291.000 | 28 | 191.900 | 50 | 28.530 | 72 | 4.241 | 94 | 0.630 | 116 | 0.094 |
| 7 | 1184.000 | 29 | 176.000 | 51 | 26.160 | 73 | 3.889 | 95 | 0.578 | 117 | 0.086 |
| 8 | 1086.000 | 30 | 161.400 | 52 | 23.990 | 74 | 3.566 | 96 | 0.530 | 118 | 0.079 |
| 9 | 995.600 | 31 | 148.000 | 53 | 22.000 | 75 | 3.270 | 97 | 0.486 | 119 | 0.072 |
| 10 | 913.000 | 32 | 135.700 | 54 | 20.170 | 76 | 2.999 | 98 | 0.446 | 120 | 0.066 |
| 11 | 837.200 | 33 | 124.500 | 55 | 18.500 | 77 | 2.750 | 99 | 0.409 | 121 | 0.061 |
| 12 | 767.600 | 34 | 114.100 | 56 | 16.960 | 78 | 2.522 | 100 | 0.375 | 122 | 0.056 |
| 13 | 704.000 | 35 | 104.700 | 57 | 15.560 | 79 | 2.312 | 101 | 0.344 | 123 | 0.051 |
| 14 | 645.600 | 36 | 95.960 | 58 | 14.270 | 80 | 2.121 | 102 | 0.315 | 124 | 0.047 |
| 15 | 592.000 | 37 | 88.000 | 59 | 13.080 | 81 | 1.945 | 103 | 0.289 | 125 | 0.043 |
| 16 | 542.900 | 38 | 80.700 | 60 | 12.000 | 82 | 1.783 | 104 | 0.265 | 126 | 0.039 |
| 17 | 497.800 | 39 | 74.000 | 61 | 11.000 | 83 | 1.635 | 105 | 0.243 | 127 | 0.036 |
| 18 | 456.500 | 40 | 67.860 | 62 | 10.090 | 84 | 1.499 | 106 | 0.223 | 128 | 0.033 |
| 19 | 418.600 | 41 | 62.230 | 63 | 9.250 | 85 | 1.375 | 107 | 0.204 | 129 | 0.030 |
| 20 | 383.900 | 42 | 57.060 | 64 | 8.482 | 86 | 1.261 | 108 | 0.187 | 130 | 0.028 |
| 21 | 352.000 | 43 | 52.330 | 65 | 7.778 | 87 | 1.156 | 109 | 0.172 | 131 | 0.026 |
| 22 | 322.800 | 44 | 47.980 | 66 | 7.133 | 88 | 1.060 | 110 | 0.158 | 132 | 0.023 |

### Rate of decrease in the number average particle size before and after ultrasonic treatment

According to one embodiment of the present invention, in the food composition of the present invention, the number average particle size measured after the ultrasonic treatment using a laser diffraction particle size distribution analyzer may be smaller than the number average particle size measured without performing the ultrasonic treatment. Specifically, the ratio of the number average particle size when the ultrasonic treatment was performed to the number average particle size when the ultrasonic treatment was not performed (which will be also referred below to as "the rate of decrease in the number average particle size before and after ultrasonic treatment") is preferably 60% or less and may be 55% or less, 50% or less, 45% or less, or 20% or less. When the rate is 60% or less, the food composition will exhibit enhanced flavor release. The lower limit is not particularly limited, and may be, for example, 3% or more, 5% or more, or 10% or more.

Although the detailed mechanism is unknown, it is presumed that aggregates of the particles are broken up in the oral cavity upon intake of the food composition, suppressing pain while releasing favorable flavor. When the rate of decrease in the number average particle size before and after ultrasonic treatment is 60%, it corresponds to the case in which, for example, the number average particle size obtained by measuring after ultrasonic treatment is 30 µm, and the number average particle size obtained by measuring without ultrasonic treatment is 50 µm.

In some samples, the number average particle size obtained by measuring after ultrasonic treatment may be larger than the number average particle size obtained by measuring without ultrasonic treatment. Although the detailed mechanism is unknown, since the values measured by a laser diffraction particle size distribution analyzer are calculated, assuming that the particles in the sample are spherical, the particle size may be overestimated when particles broken up by ultrasonic treatment have shapes far from spherical. From this viewpoint, according to one embodiment of the present invention, in the food composition of the present invention, the upper limit of the rate of decrease in the number average particle size before and after ultrasonic treatment may be, for example, 200% or less, 190% or less, 180% or less, 170% or less, 160% or less, 150% or less, 140% or less, 130% or less, 120% or less, or 110% or less. Accordingly, in the food composition of the present invention, the range of the rate of decrease in the number average particle size before and after ultrasonic treatment may be, for example, 3% or more and 200% or less.

### Mode diameter of the particles contained in the food composition

In the food composition of the present invention, the mode diameter measured using a laser diffraction particle size distribution analyzer is not particularly limited. It may be, for example, 0.01 µm or more and 200.00 µm or less.

Conventionally, in food compositions, it has been known that when the mode diameter is greater than or equal to a predetermined value, a smooth mouthfeel is impaired. For example, WO2018/174051 discloses that the smooth texture of jelly tends to be impaired when micronized whey protein having a mode diameter of 1.4 µm or more is added. However, in the food composition of the present invention, a smooth texture can be achieved by adjusting the specific surface area and the maximum particle size of the particles in the food composition. Thus, in the food composition of the present invention, the mode diameter measured using a laser diffraction particle size distribution analyzer may be, for example, 0.01 µm or more, 0.10 µm or more, 0.50 µm or more, or 1.40 µm or more. The upper limit may be 200.00 µm or less, 150.00 µm or less, 140.00 µm or less, 120.00 µm or less, 100.00 µm or less, 90.00 µm or less, 80.00 µm or less, 60.00 µm or less, 50.00 µm or less, 40.00 µm or less, 30.00 µm or less, 20.00 µm or less, 10.00 µm or less, 7.00 µm or less, 5.00 µm or less, 4.00 µm or less, 3.00 µm or less. The range may be 0.01 µm or more and 200.00 µm or less. Thus, it is presumed that the problem relating to smoothness can be solved by focusing on adjustment of the specific surface area and the maximum particle size of the particles in the food composition to the above values. This is an unexpected effect that could not have been predicted from the common general knowledge in the art, and that also provides industrially useful knowledge.

### Mode diameter

In the present invention, the expression "the mode diameter of the particles contained in the food composition" refers to the particle size corresponding to the channel representing the highest particle frequency % among the channels of the particle size distribution obtained by measuring the food composition of the present invention after ultrasonic treatment using the above-described laser diffraction particle size distribution analyzer. When multiple channels represent exactly the same particle frequency (%), the particle size of the channel representing the largest particle size among those channels is adopted.

### Particle component

The particles contained in the food composition of the present invention include particles derived from crushed vegetables, fruits, fungi, or bacteria; particles derived from water-insoluble dietary fiber or other insoluble solids; emulsified particles; and the like. In particular, the particles contained in the food composition of the present invention are preferably contained as oil-in-water particles (oil drops, emulsified particles, etc.). In particular, particles derived from citrus juice and/or emulsified particles are preferred. The expression "particles derived from citrus juice" refers to particles derived from citrus fruit peel, essential oil components in the fruit peel, and the like, as well as particles formed by the formation of complexes of these components. In the present specification, the term "emulsified particles" refers to oil-in-water emulsified particles.

Particles derived from citrus juice and/or oil-in-water emulsified particles can be added to the food composition by adjusting the moisture content on a wet-mass basis of the food composition and adding natural flavorings, synthetic flavorings, oil-based flavorings, powdered flavorings, edible fats and oils, emulsifiers (which may also be added as emulsified flavorings), and suspended citrus juice. The particle size of the particles contained in the food composition can be adjusted by appropriately adjusting the fruit-crushing conditions during preparation of citrus juice, the type of emulsifier, and their amounts added.

The amount of particles in the food composition of the present invention is not particularly limited. For example, in one embodiment in which the food composition of the present invention contains oil-in-water particles (oil drops, emulsified particles, etc.), an appropriate amount can be achieved by adjusting the amounts of the aqueous component and the oil component in the food composition. Thus, by adopting the requirements for water content and lipid content described below, the amount of particles can be appropriately adjusted, and preferred embodiments of both may be combined. Furthermore, by satisfying the requirements relating to the particle size described above, the food composition of the present invention can solve the above-described problem and can therefore be advantageously adopted as a preferred embodiment. In the present invention, embodiments exemplified for the food composition of the present invention (e.g., preferred embodiments) may be freely selected and combined with each other.

More specifically, the amount added/content of the emulsifier in the food composition of the present invention based on 100 mass% of the food composition of the present invention is as follows. The upper limit is, for example, 10.0 mass% or less, 8.0 mass% or less, 6.0 mass% or less, 4.0 mass% or less, 3.0 mass% or less, 2.0 mass% or less, or 1.0 mass% or less. The lower limit is, for example, 0.0 mass% or more, 0.01 mass% or more, 0.1 mass% or more, 0.2 mass% or more, 0.3 mass% or more, 0.4 mass% or more, or 0.5 mass% or more. The range is, for example, 0.0 mass% or more and 10.0 mass% or less. According to one embodiment of the present invention, the amount added/content of the emulsifier based on 100 mass% of the food composition of the present invention is preferably 0.0 mass% or more and 5.0 mass% or less, more preferably 0.0 mass% or more and 3.0 mass% or less, even more preferably 0.0 mass% or more and 2.0 mass% or less, and still more preferably 0.0 mass% or more and 1.0 mass% or less.

More specifically, the amount added/content of the flavoring in the food composition of the present invention based on 100 mass% of the food composition of the present invention is as follows. The upper limit is, for example, 10.0 mass% or less, 8.0 mass% or less, 6.0 mass% or less, 4.0 mass% or less, 3.0 mass% or less, 2.0 mass% or less, or 1.0 mass% or less, 0.8 mass% or less, 0.6 mass% or less, 0.4 mass% or less, 0.2 mass% or less, 0.1 mass% or less, 0.05 mass% or less, or 0.03 mass% or less. The lower limit is, for example, 0.0 mass% or more, 0.001 mass% or more, 0.005 mass% or more, 0.01 mass% or more, 0.05 mass% or more, 0.1 mass% or more, 0.2 mass% or more, 0.3 mass% or more, 0.4 mass% or more, or 0.5 mass% or more. The range is, for example, 0.0 mass% or more and 10.0 mass% or less. According to one embodiment of the present invention, the amount added/content of the flavoring based on 100 mass% of the food composition of the present invention is preferably 0.0 mass% or more and 5.0 mass% or less, more preferably 0.0 mass% or more and 3.0 mass% or less, even more preferably 0.0 mass% or more and 2.0 mass% or less, and still more preferably 0.0 mass% or more and 1.0 mass% or less. As a preferred effect of the food composition of the present invention, the food composition of the present invention tends to enhance the flavor-imparting effect of a flavoring. Although the underlying mechanism is unknown, it is presumed that the food composition of the present invention allows a retronasal flavor to be more strongly perceived because the particles partially block receptors in the oral cavity, enabling the perception of a vibrant flavor.

### Particle component derived from citrus juice

Particles derived from citrus juice are preferable from the viewpoint of suppressing oral pain while imparting a rich citrus flavor. Examples of the particles derived from citrus juice in the food composition of the present invention include particles derived from at least one citrus juice selected from the group consisting of lemon, yuzu, sudachi, lime, Satsuma mandarin, Kishu mandarin, orange, grapefruit, hassaku, calamansi, kabosu, daidai, and hyuganatsu. The citrus juice used as the particle component described here may also be the same citrus juice used as the acid component described above.

### Particle component derived from emulsified particles

Particles derived from emulsified particles are preferable from the viewpoint of stability in food compositions, and can be prepared, for example, by incorporating natural flavorings, synthetic flavorings, oil-based flavorings, powdered flavorings, edible fats and oils, emulsifiers, and the like into food compositions. Examples of natural flavorings include essential oils derived from the fruit juices described above. In addition, the natural flavorings, synthetic flavorings, oil-based flavorings, or powdered flavorings can be, for example, those that appeal to the flavor of the fruit juices described above (specifically, lemon flavor, hyuganatsu flavor, yogurt flavor, peach flavor, lychee flavor, yuzu flavor, calamansi flavor, grapefruit flavor, Satsuma mandarin flavor, pineapple flavor, etc.). Examples of edible fats and oils include naturally derived fats and oils, such as sesame oil, olive oil, avocado oil, rapeseed oil, perilla seed oil, camellia oil, rice oil, peanut oil, palm oil, coconut oil, corn oil, canola oil, egg yolk oil, soybean oil, lard, chicken fat, beef tallow, fish oils (e.g., cod liver oil, herring oil, sardine oil, mackerel oil, and salmon oil), butter, high-oleic rapeseed oil, palm stearin, palm olein, palm kernel oil, palm fractionated oil (PMF), cottonseed oil, sunflower oil, high-oleic sunflower oil, safflower oil, linseed oil, grapeseed oil, almond oil, salad oil, canola oil, milk fat, ghee, cocoa butter, acai oil, amaranth oil, apple seed oil, mustard oil, nutmeg butter, okra seed oil, papaya seed oil, apricot kernel oil, pequi oil, shiso oil, prune kernel oil, quinoa oil, ramtil oil, rice bran oil, thistle oil, tomato seed oil, and wheat germ oil. The fats and oils may be refined from these, or may be chemically synthesized. Examples of emulsifiers include monoglyceride acetate, monoglyceride lactate, monoglyceride citrate, diacetyl tartaric acid monoglyceride, monoglyceride succinate, polyglycerol fatty acid esters, polyglycerol condensed ricinoleic acid esters, quillaja extract, sucrose fatty acid esters, glycerol fatty acid esters, sorbitan fatty acid esters, propylene glycol fatty acid esters, soybean lecithin, egg yolk lecithin, soybean saponin, tea seed saponin, and sodium caseinate. In one embodiment in which the food composition of the present invention contains an emulsifier, the emulsifier may be an emulsified flavoring containing the components described above.

The particles contained in the food composition of the present invention may also contain a fat-soluble component. Examples of the fat-soluble component include carotenoids, steroids, vitamin A, vitamin D, vitamin E, vitamin K, EPA (eicosapentaenoic acid), DPA (docosapentaenoic acid), DHA (docosahexaenoic acid), α-linolenic acid, linoleic acid, arachidonic acid, oleic acid, lauric acid, myristic acid, palmitic acid, stearic acid, limonene, α-terpinene, β-terpinene, γ-terpinene, δ-terpinene, p-cymene, muurolol, cadalene, tetrahydroxybacteriohopane (C35-pentacyclic terpene alcohol), hopan-22-ol, hop-22(29)-ene, ornithine lipid, 3-(palmitoyl)-hydroxypalmitoyl-ornithyl-taurine, ornithine lipid 3-(palmitoyl)-hydroxypalmitoyl-ornithine, lysoornithine lipid 3-hydroxypalmitoyl-ornithine, cis-vaccenic acid, lecithin, and ceramide.

When the food composition of the present invention contains ceramide, the ceramide is preferably acetic acid bacteria ceramide. Acetic acid bacteria ceramide is a type of natural ceramide produced by acetic acid bacteria, and is a type of human-type ceramide. Acetic acid bacteria ceramide has a structure in which a fatty acid is amide-bonded to sphinganine, which is a precursor of sphingosine in the sphingoid base moiety of human-type ceramide. Examples of acetic acid bacteria ceramide include N-acylsphinganine (more specifically, N-2'-hydroxypalmitoyl-sphinganine, N-palmitoyl-sphinganine, O-1-glucuronyl-N-2'-hydroxypalmitoyl-sphinganine, N-cis-vaccenoyl-sphinganine, O-1-glucuronyl-N-palmitoyl-sphinganine, etc.).

### Citrus juice-derived component

The food composition of the present invention may contain a citrus juice-derived component, from the viewpoint of suppressing oral pain while imparting a rich citrus flavor. Examples of the citrus juice-derived component include limonene, γ-terpinene, β-cymene, citral, and linalool. The food composition of the present invention may contain the citrus juice-derived component in an amount of, for example, 0.1 mass ppm or more, 0.5 mass ppm or more, 1.0 mass ppm or more, 10.0 mass ppm or more, 50.0 mass ppm or more, or 100.0 mass ppm or more, and 1000 mass ppm or less, 700 mass ppm or less, 500 mass ppm or less, or 300 mass ppm or less. These components can be formulated from the citrus juice and flavorings described above. It is particularly preferable that the above components are present in the particles contained in the food composition of the present invention, from the viewpoint of achieving good flavor release.

The food composition of the present invention does not preclude the presence of relatively large particles as long as it satisfies the requirement for the particle size described above, for example, the requirement for the number average particle size of the particles. Therefore, for example, embodiments that include particles larger than the upper limit of the particle size in the above measurement method are also included in the present invention. In other words, for example, when the food composition of the present invention is a liquid food composition, a food composition in which relatively large particles are present as a precipitate may also correspond to the food composition of the present invention.

### Density of food composition

The density of the food composition of the present invention at a temperature of 4 ± 1°C is 1.20 g/cm³ or less, preferably 1.12 g/cm³ or less, more preferably 1.09 g/cm³ or less, and even more preferably 1.05 g/cm³ or less. If the density exceeds 1.20 g/cm³, the sour taste of the food composition cannot be made more refreshing, and the particles in the food composition cannot be uniformly dispersed; thus, oral pain cannot be effectively suppressed. Further, according to one embodiment of the present invention, the density of the food composition of the present invention may be 1.15 g/cm³ or less, 1.13 g/cm³ or less, 1.10 g/cm³ or less, 1.08 g/cm³ or less, 1.06 g/cm³ or less, 1.04 g/cm³ or less, 1.03 g/cm³ or less, or 1.01 g/cm³ or less. The lower limit may be, for example, 0.95 g/cm³ or more, 0.96 g/cm³ or more, 0.97 g/cm³ or more, 0.98 g/cm³ or more, 0.99 g/cm³ or more, or 1.00 g/cm³ or more. The range is preferably 0.95 g/cm³ or more and 1.20 g/cm³ or less.

Here, the density of the food composition refers to the value determined by dividing the mass of the food composition at 4 ± 1°C and atmospheric pressure by its apparent volume. That is, for example, when the apparent volume of a food composition at 4°C and atmospheric pressure is such that the mass of the food composition per cm³ is 1.10 g, the density of the food composition is calculated to be 1.10 g/cm³. When the food composition is in liquid form, the apparent volume can be defined as the volume of the food composition at 4°C and atmospheric pressure. That is, when the food composition is in liquid form, and when the mass of the food composition per ml of its volume at 4°C and atmospheric pressure is 1.10 g, the density of the food composition can be calculated to be 1.10 g/cm³.

The density value of the food composition is approximately equal to the value of "specific gravity (the ratio of the density of a substance to the density of water at 4°C and atmospheric pressure, which is 0.999972 g/cm³)." Thus, according to one embodiment of the present invention, the numerical value relating to the requirement for the density of the food composition may be defined by specific gravity as a dimensionless number. Furthermore, according to one embodiment of the present invention, the numerical value relating to the requirement for the density of the food composition may be specified by the bulk density obtained by dividing the weight of the composition by the apparent bulk volume of the composition (the sum of the volume of the composition itself, the volume of pores on the surface of the composition that communicate with the outside, the volume of internal voids, and the volume of a void formed outside the composition, between the composition and a virtual rectangular parallelepiped of minimum volume in which the composition is inscribed), or specified by the apparent bulk specific gravity calculated from the bulk specific gravity.

The density of the food composition of the present invention can be adjusted by blending the sugars described below, the sodium salts of organic acids described above, the edible fats and oils described above, the fat-soluble components described above, or soluble inorganic salts such as table salt. The density can also be adjusted by appropriately blending flavorings containing these components.

### Sugars

The food composition of the present invention preferably contains sugars. By containing sugars, it is possible to obtain the effect of imparting a refreshing sour taste to the food composition. In the present specification, the term "sugars" refers to monosaccharides or disaccharides that are not sugar alcohols. For example, the sugars may be derived from sugar, fructose, unrefined cane sugar, brown sugar, honey, maple syrup, fruit juice, starch syrup, or the like. It is more preferable that the majority of the sugars are derived from sugar, fructose, unrefined cane sugar, brown sugar, honey, maple syrup, fruit juice, or starch syrup.

### Sugar content ratio

The upper limit of the sugar content of the food composition of the present invention is preferably less than 15.0 mass%, more preferably less than 5.0 mass%, and even more preferably less than 2.5 mass%, based on 100 mass% of the food composition. In particular, when the sugar content is less than 15.0 mass%, the refreshing sour taste can be enjoyed, and further the amount of sugar intake into the body can be suppressed. The lower limit of the sugar content is generally 0 mass% or more, preferably 0.1 mass% or more, more preferably 0.2 mass% or more, and even more preferably 0.4 mass% or more, based on 100 mass% of the food composition. When the sugar content is 0.1 mass% or more, moderate sweetness can be imparted. The range is preferably 0 mass% or more and less than 15.0 mass%.

The sugar content of the food composition of the present invention is measured by high-performance liquid chromatography as described in Appendix 9 of the Food Labeling Standards, Cabinet Office Ordinance No. 10 of 2015 (effective April 1, 2023).

### Sugar concentration

The sugar concentration of the food composition of the present invention is preferably 20.0 or less, more preferably 10.0 or less, and even more preferably 5.0 or less. When the food composition of the present invention is a beverage, the sugar concentration is particularly preferably 2.5 or less. When the sugar concentration is equal to or less than this upper limit, the refreshing sour taste can be enjoyed in the food composition, and the amount of sugar intake into the body can be suppressed. The sugar concentration refers to a Brix value, and can be measured using a Brix refractometer according to standard procedures. Further, according to one embodiment of the present invention, the upper limit of the sugar concentration of the food composition may be, for example, 18.0 or less, 16.0 or less, 14.0 or less, 12.0 or less, 8.0 or less, 7.0 or less, 6.0 or less, 4.0 or less, 3.0 or less, or 2.0 or less. The lower limit can be 0.5 or more, or 1.0 or more. The range can be 0.5 or more and 20.0 or less.

### Sugar-acid ratio

The sugar-acid ratio of the food composition of the present invention is preferably 15.0 or less, more preferably 10.0 or less, and even more preferably 8.5 or less. When the sugar-acid ratio is 15.0 or less, the refreshing sour taste can be enjoyed in the food composition, and the amount of sugar intake into the body can be suppressed. When the sugar-acid ratio is 8.5 or less, the suitability as a beverage or a composition for preparing the beverage is particularly improved. The sugar-acid ratio is a value obtained by dividing the sugar concentration (Brix value) described above by the value of acidity expressed as acetic acid (mass%). For example, when the food composition has a sugar concentration of 10.0 and an acidity, expressed as acetic acid, of 2.0 mass%, the sugar-acid ratio is calculated to be 5.0. According to one embodiment of the present invention, the upper limit of the sugar-acid ratio of the food composition of the present invention may be, for example, 14.0 or less, 12.0 or less, 11.0 or less, 9.0 or less, 8.0 or less, 6.0 or less, 5.0 or less, 4.0 or less, 3.0 or less, or 2.0 or less. The lower limit can be, for example, 1.0 or more. The range can be 1.0 or more and 15.0 or less.

### Lipid

The content of lipids contained in the food composition of the present invention can be, for example, 20.0 mass% or less, 16.0 mass% or less, 14.0 mass% or less, or 12.0 mass% or less, based on 100 mass% of the food composition, and further is preferably 10.0 mass% or less, 8.0 mass% or less, 6.0 mass% or less, or 5.0 mass% or less, more preferably 3.0 mass% or less, 2.7 mass% or less, 2.5 mass% or less, 2.3 mass% or less, or 2.0 mass% or less, and particularly preferably 1.5 mass% or less, 1.2 mass% or less, 1.0 mass% or less, 0.8 mass% or less, or 0.6 mass% or less. The food composition of the present invention may be substantially free of lipids. When the lipid content is 10 mass% or less, the aftertaste after eating becomes refreshing, and as a result, a refreshing sour taste can be perceived. Here, the expression "substantially free of lipids" means that the lipid content is less than 0.5 mass%. The lipid content of the food composition of the present invention is measured, for example, in accordance with the "lipid" measurement method prescribed in the Standard Tables of Food Composition in Japan, 2015 Edition (7th Revised Edition) by the Soxhlet extraction method. According to one embodiment of the present invention, the lower limit of the lipid content of the food composition of the present invention may be, for example, 0 mass% or more, or may be 0.000000001 mass% or more, 0.00000001 mass% or more, 0.0000001 mass% or more, 0.000001 mass% or more, 0.00001 mass% or more, 0.0001 mass% or more, 0.001 mass% or more, 0.005 mass% or more, 0.01 mass% or more, 0.03 mass% or more, 0.05 mass% or more, 0.07 mass% or more, 0.10 mass% or more, 0.15 mass% or more, 0.20 mass% or more, or 0.25 mass% or more. The range is preferably 0 mass% or more and 10.0 mass% or less.

### Other components

The food composition of the present invention may contain other components, such as extracts of plants selected from vegetables, grains, algae, mushrooms, herbs, or spices. Examples thereof include barley, wheat, rye, Job's tears, common oat, rice, corn, sorghum, foxtail millet, barnyard millet, proso millet, sesame, safflower, angelica tree, dried citrus peel, aloe, gymnema, *Eucommia ulmoides, Houttuynia cordata,* chicory, evening primrose, loquat leaves, amaranth, quinoa, maize, mozuku seaweed, lotus, perilla, pine, plantain, rosemary, rooibos, mulberry leaves, Cassia seed, soybean, shiitake mushroom, shimeji mushroom, maitake mushroom, enoki mushroom, wakame seaweed, kelp, reishi mushroom, bamboo grass, persimmon leaves, coffee, tea, watercress, coriander, perilla, celery, tarragon, chives, chervil, sage, thyme, bay leaf, hops, garlic chives, parsley, mustard greens, Japanese ginger, mugwort, basil, oregano, rosemary, peppermint, savory, lemongrass, dill, wasabi leaves, Japanese pepper leaves, pepper (black, white, red), garlic, ginger, sesame seeds, chili peppers, horseradish, mustard, poppy seeds, yuzu leaves, nutmeg, cinnamon, paprika, cardamom, cumin, saffron, allspice, cloves, Japanese pepper, orange peel, fennel, licorice, fenugreek, dill seeds, cubeb pepper, long pepper, juniper berries, and olive. A desirable effect of the food composition of the present invention is that, by containing an extract of a plant selected from vegetables, grains, algae, mushrooms, herbs, or spices, it may be possible to suppress throat irritation caused by organic acids (particularly acetic acid).

Extracts of plants selected from vegetables, grains, algae, mushrooms, herbs, or spices can be prepared by known methods. For example, they can be extracts obtained by adding an aqueous solvent to the plants listed above and extracting the plant-derived components. They may also have undergone fermentation or roasting before plant extraction, or may be compositions containing tea. When the food composition of the present invention contains an extract of a plant selected from vegetables, grains, algae, mushrooms, herbs, or spices, the lower limit of the content of the plant extract is preferably, for example, 0.1 mass% or more, more preferably 0.3 mass% or more, and even more preferably 0.5 mass% or more. The upper limit is preferably 90.0 mass% or less, more preferably 70.0 mass% or less, and even more preferably 30.0 mass% or less. The range can be 0.1 mass% or more and 90.0 mass% or less. When two or more plant extracts are contained, the content of the plant extracts is defined as the total content of the respective plant extracts. In one embodiment of the present invention, the content of each of the plant extracts described above may satisfy the numerical values described above.

The food composition of the present invention may also contain a dairy-derived ingredient. The food composition of the present invention can reduce pain perceived in the mouth, and therefore pairs well with the creamy flavor of dairy-derived ingredients. Examples of dairy-derived ingredients include milk and other dairy products, and processed products thereof, such as skim milk powder, whole milk powder, concentrated milk, fermented milk, yogurt, fresh cream, condensed milk, skim milk, cream powder, sweetened milk powder, prepared milk powder, whey powder, and buttermilk powder. When the food composition of the present invention contains a dairy-derived ingredient, the lower limit of the content of the dairy-derived ingredient is preferably, for example, 0.1 mass% or more. The upper limit is preferably 90.0 mass% or less, more preferably 50.0 mass% or less, and even more preferably 5.0 mass% or less. When the food composition of the present invention contains a dairy-derived ingredient, the range of the content of the dairy-derived ingredient can be, for example, 0.1 mass% or more and 90.0 mass% or less. When two or more dairy-derived ingredients are contained, the content of the dairy-derived ingredients is defined as the total content of the respective dairy-derived ingredients. In one embodiment of the present invention, the contents of the dairy-derived ingredients described above may satisfy the numerical values described above.

The food composition of the present invention may contain soy sauce, miso, minerals (e.g., calcium, potassium, sodium, iron, zinc, and magnesium, as well as salts thereof), and other food additives. When the food composition of the present invention contains soy sauce, the content of soy sauce is preferably, for example, 3 mass% or more, more preferably 5 mass% or more, and even more preferably 8 mass% or more, from the viewpoint of imparting the umami of soy sauce while balancing the sour taste and umami. The upper limit is preferably 70 mass% or less, more preferably 50 mass% or less, and even more preferably 30 mass% or less. Further, when the food composition of the present invention contains soy sauce, the range of the content of soy sauce is preferably, for example, 3 mass% or more and 70 mass% or less.

The food composition of the present invention may contain an extract of fish. The extract of fish refers to an extract obtained by extracting an ingredient made from fish with water or an organic solvent, or refers to a concentrate of such an extract, and may be in liquid or solid form. This makes it possible to enhance rich umami in the food composition. The lower limit of the content of the fish extract in the food composition of the present invention can be, for example, 0.10 mass% or more, 0.30 mass% or more, or 0.50 mass% or more. The upper limit can be, for example, 5.00 mass% or less, 4.00 mass% or less, 3.00 mass% or less, 2.50 mass% or less, or 2.00 mass% or less. Further, the range can be, for example, 0.10 mass% or more and 5.00 mass% or less.

When the food composition of the present invention contains fish extract, examples of fish include mackerel, bonito (particularly frigate mackerel), flying fish, sea bream, flounder, sole, ray, saury, tuna, swordfish, cod, anglerfish, rockfish, sweetfish, trout, salmon, herring, yellowtail, sardine, mullet, Spanish mackerel, filefish, and smelt. Among these, it may preferably contain an extract of at least one selected from mackerel, bonito (particularly frigate mackerel), flying fish, and sea bream, and particularly preferably two or more of them. When the food composition of the present invention contains extracts derived from multiple types of fish, the content of the fish extracts refers to the total content of the extracts of the respective types of fish.

The food composition of the present invention may also contain an extract of shellfish. The extract of shellfish refers to an extract obtained by extracting an ingredient made from shellfish with water or an organic solvent, or refers to a concentrate of such an extract, and may be in liquid or solid form. This makes it possible to enhance refreshing umami in the food composition. The lower limit of the content of the shellfish extract in the food composition of the present invention can be, for example, 0.10 mass% or more, 0.30 mass% or more, or 0.50 mass% or more. The upper limit can be, for example, 5.00 mass% or less, 4.00 mass% or less, 3.00 mass% or less, 2.50 mass% or less, or 2.00 mass% or less. Furthermore, the range can be, for example, 0.10 mass% or more and 5.00 mass% or less.

When the food composition of the present invention contains shellfish extract, examples of shellfish include scallops, ark clams, geoduck clams, pen shells, turban shells, oysters, surf clams, Manila clams, hard clams, and freshwater clams. Among these, it may preferably contain an extract of at least one selected from scallops, oysters, Manila clams, hard clams, or freshwater clams, and particularly preferably scallop extract. When the food composition of the present invention contains extracts derived from multiple types of shellfish, the content of the shellfish extracts refers to the total content of the extracts of the respective types of shellfish.

The food composition of the present invention may contain an extract of livestock meat. The extract of livestock meat refers to an extract obtained by extracting an ingredient made from livestock meat with water or an organic solvent, or refers to a concentrate of such an extract, and may be in liquid or solid form. This makes it possible to enhance rich umami in the food composition. The lower limit of the content of the livestock meat extract in the food composition of the present invention can be, for example, 0.10 mass% or more, 0.30 mass% or more, or 0.50 mass% or more. The upper limit can be, for example, 5.00 mass% or less, 4.00 mass% or less, 3.00 mass% or less, 2.50 mass% or less, or 2.00 mass% or less. Further, the range can be, for example, 0.10 mass% or more and 5.00 mass% or less.

When the food composition of the present invention contains livestock meat extract, examples of livestock meat include beef, pork, chicken, lamb, goat, horse, turkey, duck, pheasant, rabbit, beef bones, pork bones, chicken bones, lamb bones, goat bones, horse bones, turkey bones, duck bones, pheasant bones, and rabbit bones. Among these, it may preferably contain an extract of at least one selected from beef, pork, chicken, beef bones, pork bones, and chicken bones, and particularly preferably chicken extract. When the food composition of the present invention contains extracts derived from multiple types of livestock meat, the content of the livestock meat extracts refers to the total content of the extracts of the respective types of livestock meat.

The food composition of the present invention may contain high-intensity sweeteners such as thaumatin, stevia extract, disodium glycyrrhizinate, acesulfame potassium, sucralose, aspartame, saccharin, neotame, and sodium saccharin. Of these, the food composition of the present invention preferably contains stevia extract and/or sucralose. When the food composition of the present invention contains sucralose, the content thereof is preferably, for example, 0.01 mass% or more and 0.07 mass% or less. When the food composition of the present invention contains stevia extract, the content thereof is preferably, for example, 0.01 mass% or more and 0.10 mass% or less.

The food composition of the present invention may contain low-molecular-weight water-soluble dietary fiber. The term "low-molecular-weight water-soluble dietary fiber" refers to dietary fiber that, among dietary fibers, has a low molecular weight as measured according to the AOAC 2011. 25 method in accordance with the method prescribed in the Standard Tables of Food Composition in Japan, 2020 Edition (8th Revised Edition) Analysis Manual (February 2022). When the food composition of the present invention contains low-molecular-weight water-soluble dietary fiber, it is preferable that the low-molecular-weight dietary fiber contains one or more selected from the group consisting of, for example, low-molecular-weight inulin, low-molecular-weight isomaltooligosaccharide, low-molecular-weight indigestible dextrin, low-molecular-weight polydextrose, low-molecular-weight β-glucan, low-molecular-weight arabinoxylan, and low-molecular-weight pectin.

When the food composition of the present invention contains low-molecular-weight water-soluble dietary fiber, the content of the low-molecular-weight water-soluble dietary fiber may be in the range of 0.60 mass% or more and 30.00 mass% or less. Specifically, the lower limit is, for example, 0.60 mass% or more, but is preferably 0.70 mass% or more, 0.80 mass% or more, 0.90 mass% or more, 1.00 mass% or more, 1.10 mass% or more, 1.20 mass% or more, 1.30 mass% or more, 1.40 mass% or more, 1.50 mass% or more, 1.60 mass% or more, 1.70 mass% or more, 1.80 mass% or more, 1.90 mass% or more, 2.00 mass% or more, 2.10 mass% or more, 2.20 mass% or more, 2.30 mass% or more, 2.40 mass% or more, 2.50 mass% or more, 2.60 mass% or more, 2.70 mass% or more, 2.80 mass% or more, 2.90 mass% or more, 3.00 mass% or more, 3.10 mass% or more, 3.20 mass% or more, 3.30 mass% or more, 3.40 mass% or more, 3.50 mass% or more, 3.60 mass% or more, 3.70 mass% or more, 3.80 mass% or more, 3.90 mass% or more, 4.00 mass% or more, 4.10 mass% or more, 4.20 mass% or more, 4.30 mass% or more, 4.40 mass% or more, 4.50 mass% or more, 4.60 mass% or more, 4.70 mass% or more, 4.80 mass% or more, 4.90 mass% or more, 5.00 mass% or more, 5.10 mass% or more, 5.20 mass% or more, 5.30 mass% or more, 5.40 mass% or more, 5.50 mass% or more, 5.60 mass% or more, 5.70 mass% or more, 5.80 mass% or more, 5.90 mass% or more, 6.00 mass% or more, 6.10 mass% or more, 6.20 mass% or more, 6.30 mass% or more, 6.40 mass% or more, 6.50 mass% or more, 6.60 mass% or more, 6.70 mass% or more, 6.80 mass% or more, 6.90 mass% or more, or 7.00 mass% or more. On the other hand, the upper limit is not particularly limited, but can be 30.00 mass% or less, 29.00 mass% or less, 28.00 mass% or less, 27.00 mass% or less, 26.00 mass% or less, 25.00 mass% or less, 24.00 mass% or less, 23.00 mass% or less, 22.00 mass% or less, 21.00 mass% or less, 20.00 mass% or less, 19.00 mass% or less, 18.00 mass% or less, 17.00 mass% or less, 16.00 mass% or less, 15.00 mass% or less, 14.00 mass% or less, 13.00 mass% or less, 12.00 mass% or less, 11.50 mass% or less, 11.00 mass% or less, 10.50 mass% or less, 10.00 mass% or less, 9.50 mass% or less, or 9.00 mass% or less. When two or more low-molecular-weight water-soluble dietary fibers are contained, the content of the low-molecular-weight water-soluble dietary fibers is defined as the total content of the respective low-molecular-weight water-soluble dietary fibers.

### Insoluble dietary fiber

The food composition of the present invention may also contain insoluble dietary fiber as measured by the AOAC 2011. 25 method. The content of the insoluble dietary fiber in the composition of the present invention as measured by the AOAC 2011. 25 method can be, for example, 20.0 mass% or less, 16.0 mass% or less, 14.0 mass% or less, or 12.0 mass% or less, based on 100 mass% of the food composition, and further can be 10.0 mass% or less, 8.0 mass% or less, 6.0 mass% or less, 5.0 mass% or less, 3.0 mass% or less, 2.7 mass% or less, 2.5 mass% or less, 2.3 mass% or less, 2.0 mass% or less, 1.5 mass% or less, 1.2 mass% or less, 1.0 mass% or less, 0.8 mass% or less, or 0.6 mass% or less. The lower limit may be, for example, 0.000000001 mass% or more, 0.00000001 mass% or more, 0.0000001 mass% or more, 0.000001 mass% or more, 0.00001 mass% or more, 0.0001 mass% or more, 0.001 mass% or more, 0.005 mass% or more, 0.01 mass% or more, 0.03 mass% or more, 0.05 mass% or more, 0.07 mass% or more, 0.10 mass% or more, 0.15 mass% or more, 0.20 mass% or more, or 0.25 mass% or more. The range can be 0 mass% or more and 10.0 mass% or less. The insoluble dietary fiber may be contained as a dietary fiber-rich portion of an edible plant, or the food composition of the present invention may be a liquid food composition in which insoluble dietary fiber is contained as a precipitate.

### Moisture content

It is preferable that the food composition of the present invention has a moisture content on a wet-mass basis greater than or equal to a predetermined value. This makes it easier for the food composition to spread throughout the oral cavity when it is placed in the mouth. Therefore, the effect of suppressing oral pain becomes greater. The moisture content on a wet-mass basis in the food composition of the present invention is preferably, for example, 20.0 mass% or more, more preferably 40.0 mass% or more, and even more preferably 45.0 mass% or more, and may be 50.0 mass% or more, 60.0 mass% or more, 70.0 mass% or more, 80.0 mass% or more, or 90.0 mass% or more, based on 100 mass% of the food composition. The upper limit is not particularly limited, but may be, for example, 99.7 mass% or less, 99.0 mass% or less, 98.0 mass% or less, 97.0 mass% or less, 96.0 mass% or less, 95.0 mass% or less, or 93.0 mass% or less. The range can be, for example, 20.0 mass% or more and 99.7 mass% or less. Furthermore, in one embodiment in which the food composition of the present invention contains oil-in-water particles, from the viewpoint of ensuring particle stability and avoiding excessive impact on flavor caused by the particles, it is particularly preferable, for example, that the moisture content on a wet-mass basis is 20.0 mass% or more and 99.7 mass% or less, and that the lipid content is 0.000000001 mass% or more and 10.0 mass% or less (provided that the sum of the moisture content on a wet-mass basis and the lipid content is less than 100 mass%).

### Food composition

The food composition of the present invention is preferably in the form of a gel-like (jelly-like) food composition or a food composition in liquid form (a liquid food composition), more preferably a liquid seasoning, a beverage, or a composition for preparing the beverage, and even more preferably a beverage or a composition for preparing the beverage. Further, the food composition of the present invention is preferably a food composition placed in a container, that is, a packaged food composition. Examples of beverages include fruit juice-containing beverages, fruit juice-flavored beverages, vegetable-containing beverages, dairy-containing beverages, energy drinks, nutritional drinks, alcohol-containing beverages such as sake, acetic acid-containing beverages such as vinegar beverages, coffee beverages, tea beverages, and cocoa beverages. Preferred are the fruit beverages defined in the Japanese Agricultural Standards (Ministry of Agriculture, Forestry and Fisheries Notification No. 489, issued on February 24, 2016) for fruit beverages, or the fruit juice-containing beverages or carbonated beverages defined in the Japanese Agricultural Standards (Ministry of Agriculture, Forestry and Fisheries Notification No. 1387, issued on May 28, 2015) for carbonated beverages. Furthermore, as described above, since it is preferable that the food composition of the present invention contains, as particles, citrus juice-derived particles and/or emulsified particles (oil-in-water emulsified particles), the food composition of the present invention can be, for example, a citrus juice-containing composition, or an oil-in-water emulsified particle-containing composition.

### Composition for preparing beverage

The composition for preparing a beverage is, for example, a concentrated beverage. This is diluted with a suitable beverage (e.g., water or any of the beverages exemplified above) before being served for drinking. When the food composition of the present invention is a composition for preparing a beverage, the dilution factor is preferably, for example, 1.1-fold or more and 50-fold or less, more preferably 2-fold or more and 20-fold or less, even more preferably 3-fold or more and 12-fold or less, and most preferably 4-fold or more and 8-fold or less. The upper limit may be, for example, 50-fold or less, 30-fold or less, 20-fold or less, 16-fold or less, 14-fold or less, 12-fold or less, 10-fold or less, 8-fold or less, 7-fold or less, 6.5-fold or less, 6-fold or less, 5.5-fold or less, 5-fold or less, or 4.5-fold or less. The lower limit may be, for example, 1.1-fold or more, 1.5-fold or more, 2.0-fold or more, 2.5-fold or more, 3.0-fold or more, 3.5-fold or more, or 3.8-fold or more. When the food composition of the present invention is a composition for preparing a beverage, it may be a composition for preparing the fruit juice-containing beverage described below.

### Low-sugar beverage

The food composition of the present invention may be a low-sugar beverage. In the present specification, the term "low-sugar beverage" refers to a beverage with a reduced content of sugars (limited to monosaccharides or disaccharides that are not sugar alcohols). For example, it may be a beverage with a sugar content of less than 2.5 g, or less than 0.5 g, based on 100 ml of the food composition, or a beverage with a sugar content of less than 2.5 mass%, or less than 0.5 mass%.

### Method for producing food composition

As a second aspect of the present invention, by performing the following steps (1) to (3), a food composition, which is the first aspect of the present invention, can be produced. That is, the food composition of the present invention can be produced by combining the configurations disclosed in the first embodiment (food composition) with each of steps (1) to (3):
(1) a step of adjusting the acidity, expressed as acetic acid, to 0.10 mass% or more;
(2) a step of adding a particle component to obtain a number average particle size of 40.0 µm or less; and
(3) a step of adjusting the density at a temperature of 4 ± 1°C to 1.20 g/cm³ or less.

### (1) Step of adjusting acidity expressed as acetic acid

Step (1) is a step of adjusting the acidity expressed as acetic acid of the food composition to 0.10 mass% or more. For example, fruit juice or brewed vinegar containing organic acids is added to a solvent mainly composed of water so that the acidity expressed as acetic acid is 0.10 mass% or more.

### (2) Step of adding particle component

Step (2) is a step of adding a particle component, which blocks oral pain, to the food composition. For example, citrus juice having a number average particle size of 40.0 µm or less is added to a solvent mainly composed of water so as to fall within a predetermined range. In addition, a natural flavoring, synthetic flavoring, oil-based flavoring, powdered flavoring, or emulsified flavoring may be blended so that the number average particle size of the particles contained in the food composition is 40.0 µm or less.

### (3) Step of adjusting density

Step (3) is a step of adjusting the density of the food composition at a temperature of 4 ± 1°C to 1.20 g/cm³ or less so that the particles in the food composition can be evenly distributed. For example, the aforementioned sugars, sodium salts of organic acids, edible fats and oils, fat-soluble components, soluble inorganic salts, flavorings containing these, and the like are added to a solvent mainly composed of water to adjust the density within a predetermined range.

### (4) Container-filling step

Furthermore, the following step (4) may be added after steps (1) to (3) above:
(4) a step of filling a container with the food composition obtained in steps (1) to (3).

It is preferable to produce a packaged food composition through step (4), and it may be placed in containers such as paper packs, PET bottles, and spouted pouches, or glass bottles. The food composition of the present invention may have a favorable appearance due to the presence of particles. Accordingly, examples of suitable containers include containers that allow the liquid portion to be visually observed, such as PET bottles.

### (5) Sterilization step

Furthermore, the following step (5) may be added after steps (1) to (3) above:
(5) a step of sterilizing the food composition obtained in steps (1) to (3).

Sterilization may be performed by heating and/or pressurization. For example, in the case of heat sterilization, sterilization can be performed by maintaining the food composition at a temperature of 60°C or higher and 120°C or lower, 65°C or higher and 100°C or lower, or 70°C or higher and 95°C or lower, for 10 seconds or more and 120 seconds or less, or 15 seconds or more and 100 seconds or less, or 20 seconds or more and 90 seconds or less.

The order in which steps (1) to (3) are performed is not particularly limited and can be changed at will. Each step may be performed simultaneously or in numerical order. Steps (4) and (5) are performed after all of steps (1) to (3) are completed; however, the order in which steps (4) and (5) are performed is not limited. The order can be changed at will, or these steps can be performed in numerical order.

### Method for masking oral irritation from highly acidic food composition

A third aspect of the present invention relates to a method for masking oral irritation from a highly acidic food composition, the method comprising adding particles having a number average particle size of 40.0 µm or less to the highly acidic food composition to adjust the density at a temperature of 4 ± 1°C to 1.20 g/cm³ or less. As described above, the particles contained in the food composition can efficiently cover sour taste receptors in the oral cavity and on the tongue, so that the sour taste component is prevented from coming into contact with the sour taste receptors and pain can be alleviated. Thus, the method is useful as a method for masking oral irritation. In the third aspect of the present invention, the highly acidic food composition is not particularly limited as long as the problem disclosed in the present invention caused by sourness can be perceived to a certain extent. For example, the highly acidic food composition refers to a food composition having an acidity, expressed as acetic acid, of 0.10 mass% or more, particularly, 0.20 mass% or more. The highly acidic food composition for use in the third aspect of the present invention may be a food composition according to the first aspect of the present invention. Thus, the embodiments disclosed in the first aspect may be freely adopted.

### Method for suppressing sourness from a highly acidic food composition without using sugar and/or method for imparting a refreshing sour taste

A fourth aspect of the present invention relates to a method for suppressing sourness from a highly acidic food composition without using sugar and/or a method for imparting a refreshing sour taste to a food composition, each method comprising adding particles having a number average particle size of 40.0 µm or less to the highly acidic food composition to adjust the density at a temperature of 4 ± 1°C to 1.20 g/cm³ or less. As described above, the particles contained in the food composition can efficiently cover sour taste receptors in the oral cavity and on the tongue, so that the sour taste component is prevented from coming into contact with sour taste receptors, and pain can be alleviated. As a result, the sourness of the food composition can be suppressed. In addition, the sourness of the food composition can be suppressed without using sugars. As a result, a refreshing sour taste can be imparted to the food composition. The highly acidic food composition for use in the fourth aspect of the present invention is synonymous with the highly acidic food composition for use in the third aspect of the present invention and it can be the food composition according to the first aspect of the present invention. Thus, the embodiments disclosed in the first aspect may be freely adopted.

### Method for reducing the sugar content of a highly acidic food composition

A fifth aspect of the present invention relates to a method for reducing the sugar content of a highly acidic food composition, the method comprising adding particles having a number average particle size of 40.0 µm or less to the highly acidic food composition to adjust the density at a temperature of 4 ± 1°C to 1.20 g/cm³ or less. As described above, the particles contained in the food composition efficiently cover sour taste receptors in the oral cavity and on the tongue, thereby preventing the sour taste component from coming into contact with sour taste receptors, and alleviating pain. Accordingly, there is no need to use sugars in the food composition, and the addition of sugars can therefore be minimized. The highly acidic food composition for use in the fifth aspect of the present invention is synonymous with the highly acidic food composition for use in the third aspect of the present invention, and it can be the food composition according to the first aspect of the present invention. Thus, the embodiments disclosed in the first aspect may be freely adopted.

### Examples

Next, the present invention is described in more detail below with reference to Examples; however, the present invention is not limited to these Examples.

### Preparation of Examples 1 to 20 and Comparative Example 1

Food compositions were prepared to have the formulations shown in Tables 2 to 4. For example, in Example 1, 6.00 mass% of apple cider vinegar (acetic acid content: 5 mass%) as an acetic acid component, 28.00 mass% of lemon juice as a citrus juice component, 0.04 mass% of sucralose as another component, an appropriate amount of brewed vinegar for acidity adjustment, an appropriate amount of sugar for Brix adjustment, an appropriate amount of emulsifier for particle size adjustment, an appropriate amount of flavoring for density adjustment, and water were added so that the total amount was 100 mass%.

The emulsifier used for particle size adjustment was a commercially available emulsified flavoring containing sucrose fatty acid ester and/or glycerol fatty acid ester. Commercially available synthetic flavorings having flavors, such as lemon, hyuganatsu, yogurt, peach, lychee, yuzu, calamansi, grapefruit, satsuma mandarin, and pineapple, were used for density adjustment. The amounts of emulsifier and flavoring mixed were each 0.0 mass% or more and 0.7 mass% or less based on 100 mass% of the food composition. In Tables 2 to 4, the content of citrus juice refers to the content on a single-strength juice basis, and the density values indicate the density at a temperature of 4 ± 1°C. In addition, since the lemon juice and yuzu juice used were suspended fruit juices, they contained particles derived from citrus juice.

### Measurement of particle size

The particle size of the samples prepared as Examples and Comparative Examples was measured by the following measurement method. Specifically, a laser diffraction particle size distribution analyzer (Microtrac MT3300 EXII system available from MicrotracBEL Corp.) was used. Distilled water was used as the solvent during measurement, and Data Management System version 2 (DMS2, MicrotracBEL Corp.) was used as the measurement application software.

In the measurement, washing was performed by pressing the washing button on the measurement application software. Then, the Set Zero button on the same software was pressed to set zero, and a sample was directly introduced until the concentration fell within an appropriate range during sample loading. After the concentration fell within the range, the ultrasonication button on the same software was pressed to perform ultrasonication at 40 kHz and 30 W for 180 seconds, followed by defoaming treatment three times. The sample was then measured by laser diffraction at a flow rate of 50% for 10 seconds, and the thus obtained values were used as the measured values.

The measurement was performed under the conditions of distribution display: volume; particle refractive index: 1.60; solvent refractive index: 1.333; upper measurement limit (µm): 2000.000 µm; and lower measurement limit (µm): 0.021 µm. In measuring the particle size distribution for each channel (CH), measurement was performed on a volume basis using, as standards, the particle sizes for the respective measurement channels shown in Table 1, thereby determining the number average particle size, maximum particle size, specific surface area, and mode diameter. The number average particle size was also measured without ultrasonic treatment to determine the rate of decrease in the number average particle size before and after the treatment.

### Sensory evaluation

Sensory evaluation was performed on the samples prepared as Examples and Comparative Examples using the following methods.

### Oral pain and smooth mouthfeel

Ten blindfolded expert panelists each received five drops of each sample under the tongue using a dropper, and after spreading the sample throughout the oral cavity with the tongue, they were instructed to swallow. At that time, "oral pain" and "smooth mouthfeel" were evaluated. After swallowing the sample, distilled water was held in the mouth to sufficiently eliminate the flavor in the oral cavity before evaluating the next sample.

### Refreshing sour taste

30 mL of each sample was poured into a glass and given to 10 expert panelists to drink, who then evaluated the "refreshing sour taste." After drinking the sample, distilled water was held in the mouth to sufficiently eliminate the flavor in the oral cavity before evaluating the next sample.

Each sample was evaluated according to the evaluation criteria below, and the average score was calculated (the value to one decimal place was rounded off) to obtain the evaluation results. For the evaluation, Example 1 and Comparative Example 1 were evaluated in advance by 10 expert panelists, and after standardizing the scores, an objective sensory test was conducted. The expert panelists were individuals whose ability to judge taste and aroma was guaranteed through specific tests. Furthermore, even for points outside of the evaluation criteria, each expert panelist recorded their observations as opinions, and these opinions were noted in the remarks column. The specific tests related to taste and aroma are the following identification tests.

### Identification Test 1

A taste quality identification test to accurately identify each taste sample from a total of 7 samples, which consist of one aqueous solution at a concentration near the threshold for each component of the five basic tastes (sweetness: taste of sugar, sour taste: taste of tartaric acid, umami: taste of monosodium glutamate, salty taste: taste of sodium chloride, and bitter taste: taste of caffeine), plus two distilled water samples added to these.

### Identification Test 2

A concentration difference identification test that accurately identifies differences in concentration among five types of saline solutions and acetic acid aqueous solutions with slightly different concentrations.

### Evaluation criteria for oral pain

1: A tingling sensation felt on the tongue and a sensation of tightness in the cheeks are strongly perceived and unfavorable.
2: A tingling sensation felt on the tongue and a sensation of tightness in the cheeks are slightly perceived, but are tolerable.
3: A tingling sensation felt on the tongue and a sensation of tightness in the cheeks are slightly weak and somewhat favorable.
4: A tingling sensation felt on the tongue and a sensation of tightness in the cheeks are weak and favorable.
5: A tingling sensation felt on the tongue and a sensation of tightness in the cheeks are very weak and very favorable.

### Evaluation criteria for smooth mouthfeel

1: Smooth mouthfeel is very low and unfavorable.
2: Smooth mouthfeel is slightly low, but is tolerable.
3: Smooth mouthfeel is slightly high and somewhat favorable.
4: Smooth mouthfeel is high and favorable.
5: Smooth mouthfeel is very high and very favorable.

### Evaluation criteria for comprehensive evaluation of oral pain and smooth mouthfeel

The average of the evaluation results for oral pain and the evaluation results for smooth mouthfeel obtained as described above was calculated (fractions rounded down) and evaluated on a four-point scale according to the following criteria.
⊚: 4.0 points or higher
○: 3.0 points or higher and less than 4.0 points
△: 2.0 points or higher and less than 3.0 points
×: Less than 2.0 points

### Evaluation criteria for refreshing sour taste

1: The sour taste is vague, and the refreshing sour taste is low, which are unfavorable.
2: The sour taste is slightly vague, and the refreshing sour taste is slightly low, which is tolerable though.
3: The sour taste is slightly refreshing, and the refreshing sour taste is slightly strong, which are somewhat favorable.
4: The sour taste is refreshing, and the refreshing sour taste is strong, which are favorable.
5: The sour taste is very refreshing, and the refreshing sour taste is very strong, which are very favorable.

The evaluation results are shown in Tables 2 to 4.

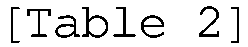

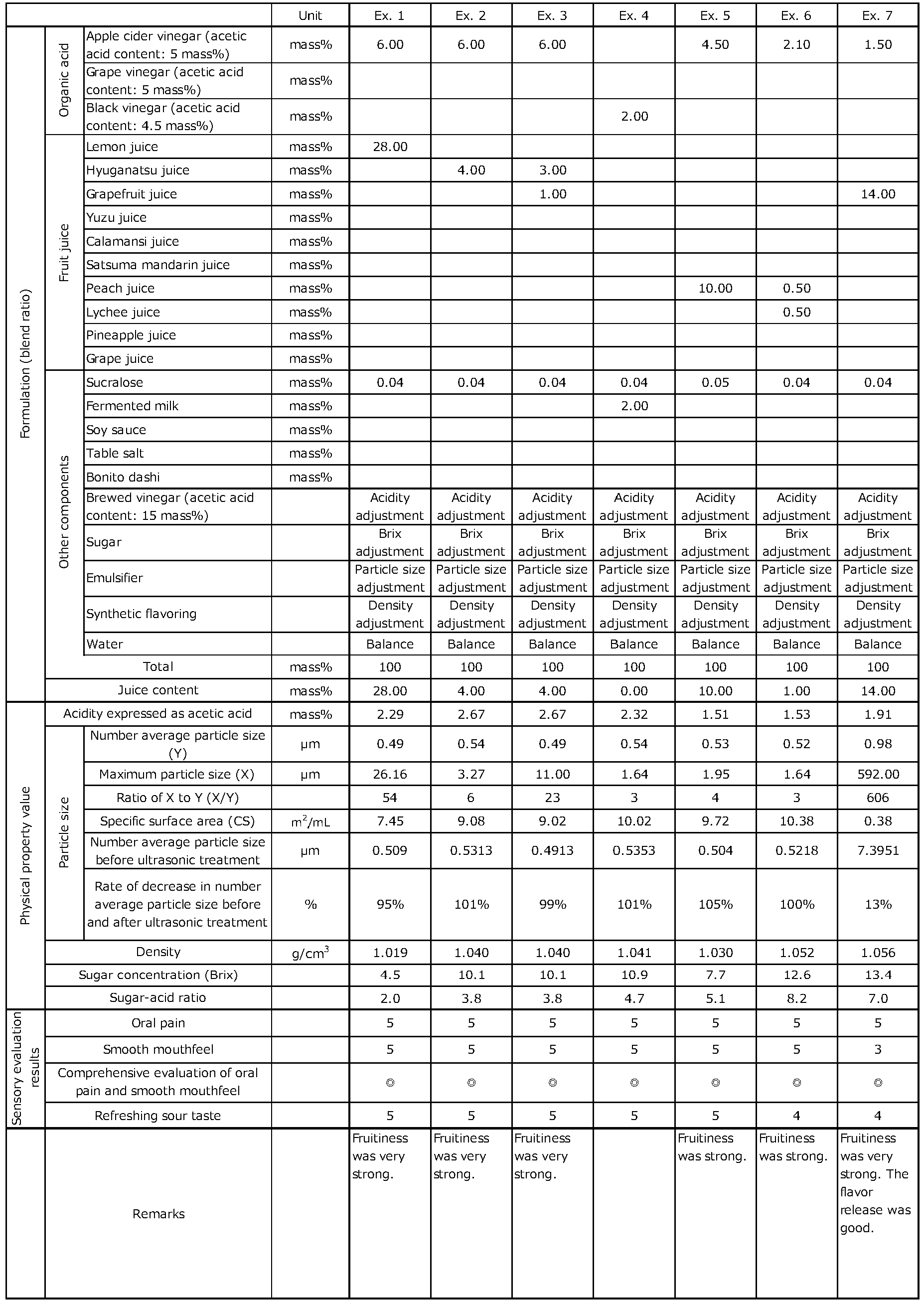

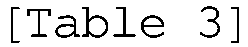

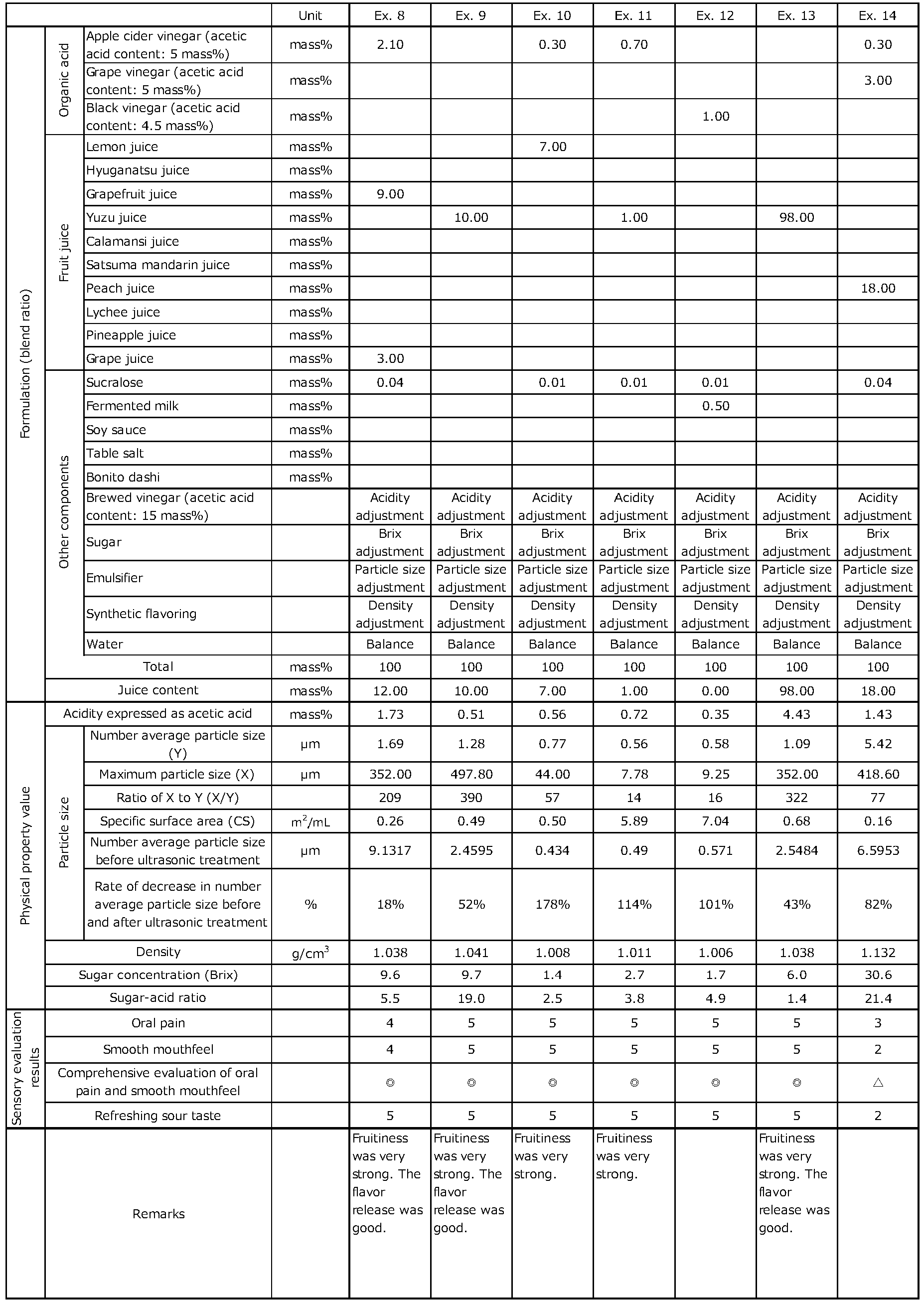

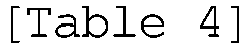

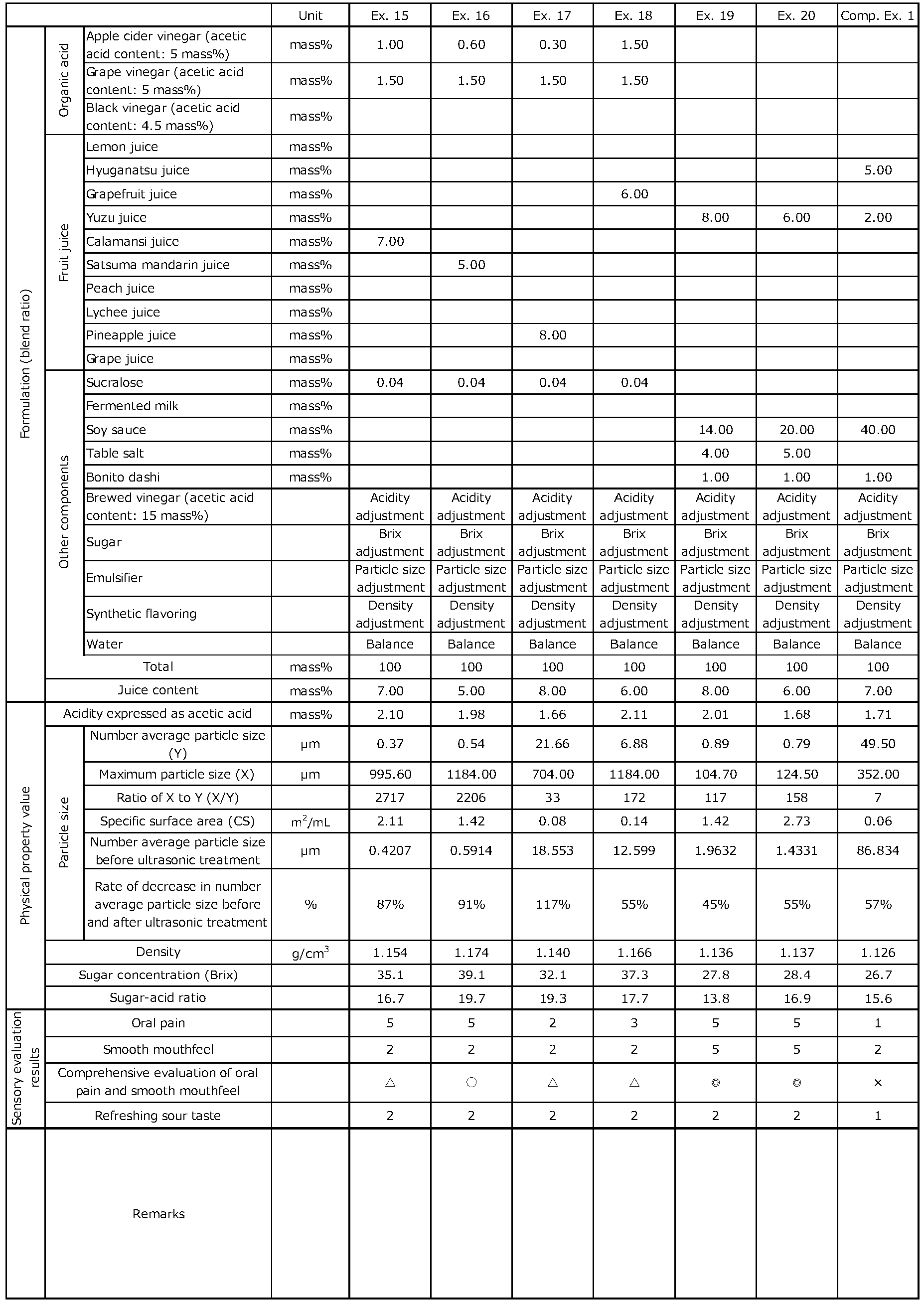

The results showed that oral pain could be suppressed by adjusting the acidity, density, and number average particle size (Y) of the samples. It was also found that it is possible to achieve both suppression of oral pain and smooth mouthfeel by adjusting the acidity, density, and number average particle size (Y), and further adjusting the maximum particle size (X) and/or specific surface area. In Examples 19 and 20, although the sour taste was somewhat vague due to saltiness and umami, the suppression of oral pain and mouthfeel smoothness were both achieved. It was presumed that they were preferable as seasonings for imparting saltiness and umami in addition to sour taste.

On the other hand, even when the sample of Comparative Example 1 was diluted with water to an acidity, expressed as acetic acid, of 0.1 mass%, the number average particle size (Y), maximum particle size (X), specific surface area (CS), and number average particle size before ultrasonic treatment were almost equivalent to those of Comparative Example 1, and the results of the various sensory evaluations were also equivalent to those of Comparative Example 1. From this, it was confirmed that when the acidity expressed as acetic acid is 0.1 mass% or more, oral pain caused by the acid in the food composition, which is the problem to be solved by the present application, occurs.

For Examples 1, 2, 3, 4, 5, 9, 10, 11, 12, and 13, which received a score of 5 in all items, and for Examples 7 and 8, which showed very strong fruitiness in the sensory evaluation results, the fruit juice-derived citric acid content, citrus juice content in the total fruit juice, sugar content, lipid content, and mode diameter were examined, and the results are shown in Table 5.

**[Table 5]**

| | Unit | Ex. 1 | Ex. 2 | Ex. 3 | Ex. 4 | Ex. 5 | Ex. 7 | Ex. 8 | Ex. 9 | Ex. 10 | Ex. 11 | Ex. 12 | Ex. 13 |
|---|---|---|---|---|---|---|---|---|---|---|---|---|---|
| Fruit juice-derived citric acid content | mass% | 1.80 | 0.03 | 0.03 | 0.00 | 0.01 | 0.14 | 0.09 | 0.41 | 0.45 | 0.04 | 0.00 | 4.00 |
| Citrus juice content in total fruit juice | mass% | 100 | 100 | 100 | 0 | 0 | 100 | 75 | 100 | 100 | 100 | 0 | 100 |
| Sugar content | mass% | <7.0 | <12.0 | <12.0 | <15.0 | <10.0 | <15.0 | <12.0 | <12.0 | <2.5 | <5.0 | <2.5 | <10.0 |
| Lipid content | mass% | <0.5 | <0.5 | <0.5 | <0.5 | <0.5 | <0.5 | <0.5 | <0.5 | <0.5 | <0.5 | <0.5 | <0.5 |
| Mode diameter | µm | 0.58 | 0.63 | 0.58 | 0.63 | 0.63 | 88.00 | 148.00 | 57.06 | 26.16 | 0.58 | 0.63 | 135.70 |

From Table 5, it was presumed that very strong fruitiness was perceived when the fruit juice-derived citric acid content was 0.03 mass% or more, or when citrus juice was used. It was also found that a sufficient effect could be perceived even with a sugar content of less than 2.5 mass%. Furthermore, it was presumed that the effect was particularly easily obtained when the lipid content was less than 0.5 mass%. It was also found that the mode diameter may be less than 1.00 µm, or 1.00 µm or more and 200 µm or less, and surprisingly may be more than 1.4 µm.

Since no purified citric acid was added in Examples 1 to 3, 7 to 11, and 13, the citric acid content in the samples is considered to be almost the same as the fruit juice-derived citric acid content. Furthermore, since no citric acid was added in Examples 4 and 12, the acidity expressed as acetic acid and the acetic acid content are considered to be almost the same.

For Examples 1 to 8, when sensory evaluation was similarly conducted on samples diluted with water so that the acidity expressed as acetic acid was 1/10, similar sensory evaluation results were obtained. When 50 ml of the sample was placed in the mouth at once and swallowed to evaluate its suitability as a beverage, no problems were observed with oral pain, smooth mouthfeel, or refreshing sour taste, and opinions were given that the drinkability was high. Further, for Examples 10 to 12, when 50 ml of the sample was placed in the mouth at once and swallowed to evaluate drinkability in more detail, opinions were given that the moderate sour taste, well-balanced with sweetness, was perceived as refreshing, and that the drinkability was likewise extremely high.

Therefore, it was shown that when the acidity expressed as acetic acid is 0.10 mass% or more and 1.00 mass% or less, the suitability as a beverage is extremely high, and further that when the acidity expressed as acetic acid is 1.00 mass% or more and 3.00 mass% or less, it is particularly useful as a composition for preparing a beverage. It was also shown that as a beverage, the sugar-acid ratio may be 10.0 or less, 8.0 or less, 6.0 or less, 5.0 or less, 4.0 or less, 3.0 or less, or 2.0 or less, and is particularly preferably in the range of 1.0 or more and 8.5 or less.

Furthermore, similar results were obtained even when sucralose was replaced with 1.5 times the amount of stevia extract (commercially available stevia extract that conforms to the standards for food additives set by the Japan Food Chemical Research Foundation). Similar results were also obtained even when samples were prepared to have the same formulations as in Examples 1 to 3 using diluted acetic acid (acetic acid (produced by Kanto Chemical Co., Ltd., grade: special grade, purity: 99.7% or more) diluted to an acidity, expressed as acetic acid, of 15.00 mass%) or diluted citric acid in place of apple cider vinegar (acetic acid content: 5 mass%), grape vinegar (acetic acid content: 5 mass%), black vinegar (acetic acid content: 4.5 mass%), or brewed vinegar (acetic acid content: 15 mass%).

From the above, the Examples confirmed that the present invention can provide a food composition with suppressed oral pain caused by the acid in the food composition, and a method for producing the same.

## Claims

1. A food composition having an acidity, expressed as acetic acid, of 0.10 mass% or more,
comprising particles having a number average particle size of 40.0 µm or less, and
having a density of 1.20 g/cm³ or less at a temperature of 4 ± 1°C.

2. The food composition according to claim 1, comprising 0.10 mass% or more of an organic acid based on 100 mass% of the food composition.

3. The food composition according to claim 2, wherein the organic acid is at least one selected from the group consisting of acetic acid, citric acid, malic acid, lactic acid, and tartaric acid.

4. The food composition according to any one of claims 1 to 3, comprising 0.50 mass% or more of fruit juice based on 100 mass% of the food composition.

5. The food composition according to claim 4, having a citric acid content derived from the fruit juice of 0.01 mass% or more based on 100 mass% of the food composition.

6. The food composition according to claim 4 or 5, wherein the fruit juice comprises 50 mass% or more of citrus juice based on 100 mass% of the fruit juice.

7. The food composition according to claim 6, comprising, as the citrus juice, at least one citrus juice selected from the group consisting of lemon, yuzu, sudachi, lime, Satsuma mandarin, Kishu mandarin, orange, grapefruit, hassaku, calamansi, kabosu, daidai, and hyuganatsu.

8. The food composition according to any one of claims 1 to 7, having an X/Y ratio of 1000 or less, wherein X is a maximum particle size of the particles contained in the food composition, and Y is the number average particle size.

9. The food composition according to any one of claims 1 to 8, wherein the particles contained in the food composition have a specific surface area of 0.25 m²/mL or more.

10. The food composition according to any one of claims 1 to 9, wherein the rate of decrease in the number average particle size before and after subjecting the food composition to ultrasonic treatment is 60% or less.

11. The food composition according to any one of claims 1 to 10, wherein the particles contained in the food composition are particles derived from the citrus juice and/or emulsified particles.

12. The food composition according to claim 11, comprising particles derived from at least one citrus juice selected from the group consisting of lemon, yuzu, sudachi, lime, Satsuma mandarin, Kishu mandarin, orange, grapefruit, hassaku, calamansi, kabosu, daidai, and hyuganatsu.

13. The food composition according to any one of claims 1 to 12, having a sugar-acid ratio of 15.0 or less.

14. The food composition according to any one of claims 1 to 13, having a sugar content of less than 15.0 mass% based on 100 mass% of the food composition.

15. The food composition according to any one of claims 1 to 14, having a lipid content of 10.0 mass% or less based on 100 mass% of the food composition.

16. The food composition according to any one of claims 1 to 15, having a moisture content, on a wet-mass basis, of 20.0 mass% or more based on 100 mass% of the food composition.

17. The food composition according to any one of claims 1 to 16, which is a beverage or a composition for preparing the beverage.

18. The food composition according to claim 17, wherein the beverage is a low-sugar beverage.

19. A method for producing a food composition, comprising the following steps (1) to (3):
(1) a step of adjusting the acidity, expressed as acetic acid, to 0.10 mass% or more;
(2) a step of adding a particle component to obtain a number average particle size of 40.0 µm or less; and
(3) a step of adjusting the density at a temperature of 4 ± 1°C to 1.20 g/cm³ or less.

20. A method for masking oral irritation from a highly acidic food composition, comprising adding particles having a number average particle size of 40.0 µm or less to the highly acidic food composition to adjust the density at a temperature of 4 ± 1°C to 1.20 g/cm³ or less.

21. A method for suppressing oral irritation from a highly acidic food composition without using sugars, comprising adding particles having a number average particle size of 40.0 µm or less to the highly acidic food composition to adjust the density at a temperature of 4 ± 1°C to 1.20 g/cm³ or less.

22. A method for reducing the sugar content of a highly acidic food composition, comprising adding particles having a number average particle size of 40.0 µm or less to the highly acidic food composition to adjust the density at a temperature of 4 ± 1°C to 1.20 g/cm³ or less.
